# EUROPÄISCHE PATENTANMELDUNG

(11) **EP 4 201 579 A1**
(43) Veröffentlichungstag der Anmeldung: **28.06.2023**
(21) Anmeldenummer: 21217044.3
(22) Anmeldetag: 22.12.2021
(51) Int. Cl.: B23K 26/38, G05B 19/418

(54) **VERFAHREN UND VORRICHTUNG ZUM SCHNEIDEN UND ENTNEHMEN VON TEILEN**

(71) Anmelder: Bystronic Laser AG, 3362 Niederönz (CH)
(72) Erfinder: HAAS, Titus, 4800 Zofingen (CH); JACOBI, Stefan, 59597 Bad Westernkotten (DE); FAHRNI, Christoph, 3363 Oberönz (CH)
(74) Vertreter: Patentanwälte Geyer, Fehners & Partner mbB

(57) **Zusammenfassung**

Es wird ein Verfahren und eine Vorrichtung zum Schneiden von Teilen gemäß einem Schneidplan aus einem Werkstück und zum Entnehmen der geschnittenen Teile aus einem Werkstückrest des Werkstücks angegeben. Das Verfahren enthält die Schritte: Erfassen der geschnittenen Teile in dem Werkstückrest mit einer Sensoreinrichtung, Bereitstellen von Sensordaten über die erfassten geschnittenen Teile und Abgleichen der Sensordaten mit dem Schneidplan (SA); Identifizieren von geschnittenen Teilen mit mindestens einer Entnahmekomplikation anhand der Sensordaten (SB); Klassifizieren der identifizierten Teile gemäß einer vorbestimmten Entnahmekomplikationsklassifikation, wobei jedem identifizierten Teil mindestens eine Komplikationsklasse zugeordnet wird (SC); Entnehmen von geschnittenen Teilen, die frei von einer Entnahmekomplikation sind, mit einer Entnahmeeinrichtung (SD); und Behandeln der klassifizierten Teile mit mindestens einer Entnahmekomplikation gemäß mindestens einem, der jeweiligen Komplikationsklasse zugeordneten Behandlungsschritt (SE).

## Beschreibung

Die Erfindung betrifft ein Verfahren zum Schneiden von Teilen gemäß einem Schneidplan aus einem Werkstück und zum Entnehmen der geschnittenen Teile aus einem Werkstückrest des Werkstücks, eine Vorrichtung zum Schneiden von Teilen gemäß einem Schneidplan aus einem Werkstück und zum Entnehmen der geschnittenen Teile aus einem Werkstückrest des Werkstücks und ein Computerprogrammprodukt.

Bekannte Schneidanlagen, wie Laserschneidanlagen, können mit Einrichtungen ausgestattet sein, mit denen aus einem Werkstück, z.B. einem Blech, geschnittene Teile von der Werkstückunterlage aus dem Werkstückrest entnommen und auf Paletten geladen werden. Dabei können die Teile sortiert werden. Die Teile werden typischerweise mit vorbestimmten Schneidkonturen gemäß einem Schneidplan geschnitten, beispielsweise werden die Teile Material sparend verschachtelt aus dem Werkstück geschnitten. Jedoch können nach einem Schneidvorgang auf der Werkstückunterlage Teile mit einer Entnahmekomplikation vorhanden sein, d.h. geschnittene Teile, die aufgrund einer Entnahmekomplikation nicht aus dem Werkstückrest entnommen werden können. Beispielsweise kann ein Teil unvollständig geschnittenen sein und am Werkstückrest nicht ablösbar haften. Das Teil kann ferner an der Werkstückunterlage haften, so dass es nicht entfernt werden kann. Das Teil kann derart verkippt sein, dass ein Greifer einer Entnahmeeinrichtung das Teil nicht ergreifen kann. Das Teil kann unterhalb des Werkstückrests angeordnet sein und daher nicht entnommen werden. Das Teil kann zwischen Auflageelemente der Werkstückunterlage gefallen sein und daher für den Greifer nicht erreichbar sein. Des Weiteren kann das Teil in einem für den Greifer vorgesehenen Kontaktbereich des Werkstücks verunreinigt sein, so dass ein Greifen des Werkstücks verhindert wird, z.B. bei magnetischen Greifern. Mit einigen Entnahmeeinrichtungen kann mittels einer Druckmessung, z.B. durch Erzeugen eines Unterdrucks am geschnittenen Teil, die grundsätzliche Entnehmbarkeit und/oder Sortierbarkeit eines geschnittenen Teils ermittelt werden.

Aufgabe ist es, ein Verfahren und eine Vorrichtung zum Schneiden von Teilen gemäß einem Schneidplan aus einem Werkstück und zum Entnehmen der geschnittenen Teile aus einem Werkstückrest des Werkstücks bereitzustellen, die ein Entnehmen von geschnittenen Teilen mit einer Entnahmekomplikation ermöglichen.

Diese Aufgabe wird gelöst durch ein Verfahren zum Schneiden von Teilen gemäß einem Schneidplan aus einem Werkstück und zum Entnehmen der geschnittenen Teile aus einem Werkstückrest des Werkstücks nach Anspruch 1, eine Vorrichtung zum Schneiden von Teilen gemäß einem Schneidplan aus einem Werkstück und zum Entnehmen der geschnittenen Teile aus einem Werkstückrest des Werkstücks nach Anspruch 9 und ein Computerprogrammprodukt nach Anspruch 19.

Eine Ausführungsform betrifft ein Verfahren zum Schneiden, insbesondere Laserschneiden, von Teilen gemäß einem Schneidplan aus einem Werkstück und zum Entnehmen der geschnittenen Teile aus einem Werkstückrest des Werkstücks, beinhaltend die Schritte
- Erfassen der geschnittenen Teile in dem Werkstückrest mit einer Sensoreinrichtung, Bereitstellen von Sensordaten über die erfassten geschnittenen Teile und Abgleichen der Sensordaten mit dem Schneidplan;
- Identifizieren von geschnittenen Teilen mit mindestens einer Entnahmekomplikation anhand der Sensordaten;
- Klassifizieren der identifizierten Teile gemäß einer vorbestimmten Entnahmekomplikationsklassifikation, wobei jedem identifizierten Teil mindestens eine Komplikationsklasse zugeordnet wird;
- Entnehmen von geschnittenen Teilen, die frei von einer Entnahmekomplikation sind, mit einer Entnahmeeinrichtung; und
- Behandeln der klassifizierten Teile mit mindestens einer Entnahmekomplikation gemäß mindestens einem, der jeweiligen Komplikationsklasse zugeordneten Behandlungsschritt.

In dem Verfahren werden Teile gemäß einem Schneidplan aus einem Werkstück geschnitten. Das Verfahren ermöglicht ein verbessertes Entnehmen, insbesondere ein verbessertes Sortieren, der geschnittenen Teile. Das Schneiden kann mit einem Schneidwerkzeug, z.B. einem Laserstrahl, erfolgen. Das Werkstück kann ein Metallblech sein und die Teile können Metallteile sein. Es können nicht nur Teile entnommen werden, die frei von einer Entnahmekomplikation sind, d.h. die Teile ohne Entnahmekomplikation sind, und/oder die insbesondere dem Schneidplan entsprechen. Es können auch Teile entnommen werden, die eine Entnahmekomplikation besitzen, die z.B. aufgrund ihrer Position, Ausrichtung, Reinheit, Lösbarkeit von einer Werkstückunterlage und/oder ihres Schneidzustands nicht auf dieselbe Weise wie die Teile ohne Entnahmekomplikation entnommen werden können, und/oder die insbesondere nicht dem Schneidplan entsprechen. Mindestens ein Teil kann eine oder mehrere Entnahmekomplikationen besitzen. Mindestens einem Teil kann eine oder mehrere Komplikationsklassen zugeordnet werden. Ferner kann das Entnehmen und/oder Sortieren der Teile überwacht werden, beispielsweise ferngesteuert mittels einer Remote-Überwachung. Mit den Informationen, die im Verfahren über die Teile mit einer Entnahmekomplikation gewonnenen werden, kann das Verfahren optimiert werden. Beispielsweise können die Informationen eingesetzt werden für ein wiederholtes Schneiden. Des Weiteren können die Informationen genutzt werden für eine Verbesserung einer Sortierstrategie und/oder einer oder mehrerer Sortiervorgaben, z.B. Kontaktposition auf dem Teil für die Entnahmeeinrichtung, z.B. mittels maschinellem Lernen. Mit den gewonnenen Informationen kann ein Verschachtelungsverfahren für den Schneidplan optimiert werden. Ferner kann anhand der gewonnenen Informationen bei komplizierten Entnahmekomplikationen und/oder bei einer Kombination mehrerer Entnahmekomplikationen ein gesteuertes und/oder geregeltes Ergreifen der geschnittenen Teile mit der Entnahmeeinrichtung realisiert werden. Einer oder mehrere Schritte des Verfahrens und seiner Abwandlungen können als eine oder mehrere intelligente Prozeduren implementiert werden. Diese Vorteile können z.B. im Rahmen einer intelligenten Fertigung (Smart Factory), insbesondere einer Produktionsumgebung, die sich zumindest teilweise selbst organisiert, genutzt werden.

Gemäß alternativer Verfahrensweisen kann der Schritt des Identifizierens ein Identifizieren der geschnittenen Teile, die frei von einer Entnahmekomplikation sind, anhand der Sensordaten beinhalten. Ferner kann der Schritt des Klassifizierens ein Klassifizieren der identifizierten Teile, die frei von einer Entnahmekomplikation sind, gemäß der vorbestimmten Entnahmekomplikationsklassifikation beinhalten. Der Schritt des Entnehmens der geschnittenen Teile, die frei von einer Entnahmekomplikation sind, kann ein Entnehmen der klassifizierten Teile, die frei von einer Entnahmekomplikation sind, beinhalten.

In dem Verfahren kann die Entnahmekomplikationsklassifikation mindestens eine der folgenden Komplikationsklassen umfassen, ausgewählt aus:
- Teil, das unvollständig geschnitten ist;
- Teil, das an einer Werkstückunterlage haftet;
- Teil, das in einem vom Schneidplan abweichenden Neigungswinkel angeordnet ist;
- Teil, das in einer vom Schneidplan abweichenden Position auf einem Entnahme-Kollisionskurs zum Werkstückrest angeordnet ist;
- Teil, das in einer vom Schneidplan abweichenden Position außer Reichweite oder in Reichweite der Entnahmeeinrichtung angeordnet ist;
- Teil, das in einem für die Entnahmeeinrichtung vorgesehenen Kontaktbereich des Teils mit Werkstückabfall und/oder einer Verunreinigung versehen ist; und
- Teil, das frei von einer Entnahmekomplikation ist.

In dem Verfahren kann der mindestens eine Behandlungsschritt ausgewählt sein aus
- erneutes Schneiden eines klassifizierten Teils, das unvollständig geschnitten ist;
- Unterlassen der Entnahme eines klassifizierten Teils, das unvollständig geschnitten ist und/oder an einer Werkstückunterlage haftet, Ausgeben einer Entnahmekomplikationsinformation und/oder Einplanen des Schneidens eines entsprechenden Teils;
- Entnehmen eines klassifizierten Teils, das in einem vom Schneidplan abweichenden Neigungswinkel angeordnet ist, mit der Entnahmeeinrichtung, wobei eine Greifeinheit, insbesondere ein Greifarm, der Entnahmeeinrichtung anhand der Sensordaten den Neigungswinkel kompensierend winkelig verstellt wird;
- Entnehmen eines klassifizierten Teils, das in einer von dem Schneidplan abweichenden Position auf einem Entnahme-Kollisionskurs zum Werkstückrest angeordnet ist, mit der Entnahmeeinrichtung, wobei die Entnahmeeinrichtung anhand der Sensordaten den Kollisionskurs vermeidend angesteuert wird;
- Unterlassen der Entnahme eines klassifizierten Teils, das in einer von dem Schneidplan abweichenden Position außer Reichweite der Entnahmeeinrichtung angeordnet ist, Ausgeben einer Entnahmekomplikationsinformation und/oder Einplanen des Schneidens eines entsprechenden Teils;
- Lokalisieren eines klassifizierten Teils, das in einer von dem Schneidplan abweichenden Position in Reichweite der Entnahmeeinrichtung angeordnet ist, und Entnehmen des klassifizierten Teils mit der Entnahmeeinrichtung;
- Lokalisieren eines Werkstückabfalls und/oder einer Verunreinigung, der/die in einem für die Entnahmeeinrichtung vorgesehenen Kontaktbereich eines klassifizierten Teils vorhanden ist, anhand der Sensordaten, Entfernen des Werkstückabfalls und/oder der Verunreinigung mit einer Reinigungseinrichtung anhand der Sensordaten und Entnehmen des klassifizierten Teils mit der Entnahmeeinrichtung; und
- Lokalisieren eines Werkstückabfalls und/oder einer Verunreinigung, der/die in einem für die Entnahmeeinrichtung vorgesehenen Kontaktbereich eines klassifizierten Teils vorhanden ist, anhand der Sensordaten, Kontaktieren des klassifizierten Teils mit der Entnahmeeinrichtung außerhalb des Kontaktbereichs anhand der Sensordaten und Entnehmen des klassifizierten Teils mit der Entnahmeeinrichtung.

In dem Verfahren kann das Entnehmen der geschnittenen Teile, die frei von einer Entnahmekomplikation sind, und/oder das Behandeln der klassifizierten Teile mit mindestens einer Entnahmekomplikation, und/oder das Entnehmen der klassifizierten Teile mit mindestens einer Entnahmekomplikation, und/oder das Entnehmen der klassifizierten Teile, die frei von einer Entnahmekomplikation sind, ein Sortieren der jeweiligen Teile, insbesondere ein Sortieren nach Formgleichheit, beinhalten. Dabei kann mindestens ein Sortierparameter, der beispielsweise in dem Schneidplan enthalten ist und/oder in einer Steuereinrichtung und/oder in einer Speichereinheit gespeichert ist, genutzt werden. Ferner kann das Erfassen der Teile in dem Werkstückrest ein optisches Erfassen, insbesondere ein ein-, zwei- und/oder dreidimensionales Erfassen, beinhalten. Ferner können die Sensordaten ein-, zwei- und/oder dreidimensionale Informationen und/oder Daten enthalten.

In dem Verfahren kann die Sensoreinrichtung mindestens einen optischen Sensor aufweisen. Die Sensoreinrichtung kann stationär oder mobil, insbesondere an einem beweglichen Roboterarm angeordnet, sein. Die Position der Sensoreinrichtung kann im Verfahren verändert werden. Die Sensoreinrichtung kann mindestens eine Kamera, die an mindestens zwei unterschiedlichen Aufnahmepositionen angeordnet wird, oder mindestens zwei Kameras, die an unterschiedlichen Positionen angeordnet sind oder werden, aufweisen. Auf diese Weise kann eine dreidimensionale Stereovision realisiert werden.

In allen Ausführungsformen kann für eine Interaktion der Sensoreinrichtung mit der Steuereinrichtung der Vorrichtung, mit der das Verfahren durchgeführt wird, und/oder mit einer Steuereinheit der Entnahmeeinrichtung eine Kalibration der Sensoreinrichtung durchgeführt werden. In der Steuereinrichtung und/oder Steuereinheit kann ein entsprechendes Kalibrationsmodul vorgesehen sein.

Bei der Kalibration können Sensordaten, z.B. Bilder, von Punkten an mindestens vier bekannten Positionen in einem Koordinatensystem der Vorrichtung, mit der das Verfahren durchgeführt wird, erfasst und verarbeitet werden. Als Kalibrierpunkt eignet sich beispielsweise eine Harris-Ecke (Harris corner).

Es kann vorgesehen sein, dass entlang einer Schneidkontur eines geschnittenen Teils Messpunkte definiert und auf Helligkeit und/oder Farbwerte überwacht werden. Alle, mehrere oder nur einzelne Bereiche einer Schneidkontur, wie zum Beispiel nur eine von zwei gegenüberliegenden Seiten, können mit Messpunkten versehen werden. Die Sensordaten können zur Ermittlung von Graubereichen und/oder Farbwerten entlang der Schneidkontur des Teils analysiert werden und/oder mit einem neuronalen Netzwerk kann die Entnahmekomplikation, insbesondere anhand der Graubereiche, geschätzt werden. Dies kann erfolgen im Schritt Identifizieren von geschnittenen Teilen mit mindestens einer Entnahmekomplikation anhand der Sensordaten. Beispielsweise kann zur Identifizierung eines Teils, das in einem vom Schneidplan abweichenden Neigungswinkel angeordnet ist, ein Algorithmus "Color along edge" gegenüberliegende Graubereiche jeweils innerhalb zu außerhalb der Schneidkontur vergleichen, wobei die Graubereiche mit zwei an unterschiedlichen Positionen angeordneten, zweidimensional abbildenden Kameras erfasst werden. Sind die Unterschiede minimal, ist das geschnittene Teil nicht verkippt und in einem dem Schneidplan entsprechenden Neigungswinkel angeordnet. Andernfalls werden dieselben erfassten Graubereiche beider Kameras aufbereitet, um mit einem neuronalen Netzwerk vorherzusagen und zu entscheiden, ob das geschnittene Teil verkippt ist oder in einem dem Schneidplan entsprechenden Neigungswinkel angeordnet ist. Zur Vorverarbeitung der erfassten Graubereiche kann der Algorithmus Histogramme (Tabellen) verwenden, in denen die Unterschiedswerte der Graubereiche kumuliert sind. Die relevante Information über den Zustand des Teils kann somit direkt aus der Tabelle entnommen werden und muss nicht für jedes Teil individuell ermittelt werden. Somit kann für alle geschnittenen Teile dasselbe neuronale Netzwerk verwendet werden. Außerdem kann für das Entnehmen der geschnittenen Teile, deren dreidimensionale Lage ermittelt werden soll, eine Vision-Library mit einem Musterabgleichalgorithmus eingesetzt werden.

Das Schätzen der Entnahmekomplikation kann ein Zugreifen auf zumindest ein trainiertes neuronales Netzwerk mit mindestens einem der vorverarbeiteten Graubereiche beinhalten, um ein Ergebnis zur Schätzung der Entnahmekomplikation zu berechnen. Die Vorverarbeitung kann das Optimieren von Graubereichen beinhalten und/oder Extrahieren bestimmter Graubereiche entlang der Schneidkontur. Während des Trainings des neuronalen Netzwerks können automatisch diejenigen Merkmale der Sensordaten und der Graubereiche bestimmt werden, die für die Schätzung der Entnahmekomplikation und für die Berechnung des Ergebnisses zu berücksichtigen sind. Das neuronale Netzwerk kann ein rechnerimplementiertes und maschinelles neuronales Netzwerk, z.B. ein deep neural network (DNN) in Form eines convolutional neural networks (CNN) sein. So kann unter Einsatz künstlicher Intelligenz und/oder mit maschinellem Lernen mindestens eine Entnahmekomplikation ermittelt werden. Auf diese Weise kann beispielsweise die Identifizierung von in einem vom Schneidplan abweichenden Neigungswinkel angeordneten geschnittenen Teilen erfolgen.

Die Sensoreinrichtung kann mindestens eine TOF(Time of Flight)-Kamera aufweisen, mit der Tiefeninformationen über die Teile gewonnen werden. Das Prinzip der TOF-Kamera, das die Tiefeninformationen mit einem Laufzeitverfahren ermittelt, hat den Vorteil, dass ein ganzer Bereich des Werkstücks auf einmal aufgenommen wird und nicht abgetastet werden muss.

Die Sensoreinrichtung kann ferner mindestens eine Lichtfeld-Kamera aufweisen, mit der Tiefeninformationen über die Teile gewonnen werden. Die Sensoreinrichtung kann mindestens einen Musterprojektor aufweisen. Die Sensoreinrichtung kann des Weiteren mindestens ein Lidar(Light Detection and Ranging)-System aufweisen. Ein typischer Lidar-Sensor basiert auf dem Laufzeitverfahren. Er sendet gepulste Lichtwellen in die Umgebung aus, die von dem Werkstück reflektiert werden und zum Detektor des Sensors zurückkehren. Die Zeit, die jeder Impuls bis zur Rückkehr benötigt, wird zur Berechnung der zurückgelegten Strecke verwendet. Die Sensoreinrichtung kann auch mindestens einen Ultraschall-Sensor aufweisen, der einen Ultraschall-Puls aussendet, welcher von umliegenden Objekten reflektiert und mit einer Mehrzahl, z.B. einem Array, von Mikrophonen erfasst wird. Mit den vorstehenden Ausgestaltungen der Sensoreinrichtung können Tiefeninformationen über die geschnittenen Teile gewonnen werden.

In dem Verfahren können Daten über die durchgeführten Behandlungsschritte erfasst werden. Zur Vermeidung von Entnahmekomplikationen können unter Verwendung der Daten über die durchgeführten Behandlungsschritte mindestens ein Element ausgewählt aus mindestens einem Schneidparameter, insbesondere mindestens einen die Breite eines Schnittspalts anpassenden Schneidparameter, mindestens einem Entnahmeparameter, mindestens einer Entnahmestrategie, mindestens einem Sortierparameter und mindestens einer Sortierstrategie angepasst werden. Beispielsweise können die Schneidparameter für die Automation des Verfahrens und das Sortieren der Teile optimiert werden, z.B. Parameter, die zu einem breiteren Schnittspalt führen, was die Automation vereinfacht. Zur Vermeidung von Entnahmekomplikationen kann unter Verwendung der Daten über die durchgeführten Behandlungsschritte der Schneidplan, z.B. die Position der Teile, angepasst werden. Im Verfahren können die angepassten Parameter und/oder die angepassten Strategien in einem Schritt zur Regelung des Schneidens der Teile, der Entnahme der Teile und/oder des Sortierens der Teile eingesetzt werden.

In dem Verfahren kann mit der Sensoreinrichtung das Entnehmen überwacht werden. Während des Verfahrens und/oder in einem abschließenden Verfahrensschritt kann mit der Sensoreinrichtung eine Werkstückunterlage erfasst und/oder überprüft werden. Im Falle eines Verschleißes der Werkstückunterlage kann eine Verschleißinformation ausgegeben werden, wobei die Verschleißinformation insbesondere angibt, welche Elemente der Werkstückunterlage zu welchem Zeitpunkt ersetzt werden müssen. Im Falle einer Kontamination der Werkstückunterlage kann eine Reinigung derselben eingeplant werden. Eine Kontamination kann Werkstückabfall und/oder eine Verunreinigung, typischerweise beim Schneiden erzeugte Schlacke, enthalten.

Eine weitere Ausführungsform betrifft eine Vorrichtung zum Schneiden, insbesondere Laserschneiden, von Teilen gemäß einem Schneidplan aus einem Werkstück und zum Entnehmen der geschnittenen Teile aus einem Werkstückrest des Werkstücks, insbesondere mit einem Verfahren nach einer der vorstehenden Ausführungsformen und Abwandlungen davon, beinhaltend eine Werkstückunterlage, eine Sensoreinrichtung zum Erfassen der geschnittenen Teile in dem Werkstückrest, eine Entnahmeeinrichtung zum Entnehmen der Teile und eine Steuereinrichtung. Dabei weist die Steuereinrichtung auf
- ein Sensormodul zum Steuern der Sensoreinrichtung und zum Bereitstellen von Sensordaten über die erfassten geschnittenen Teile,
- ein Abgleichmodul zum Abgleichen der Sensordaten mit dem Schneidplan;
- ein Identifizierungsmodul zum Identifizieren von geschnittenen Teilen mit mindestens einer Entnahmekomplikation anhand der Sensordaten;
- ein Klassifizierungsmodul zum Klassifizieren der identifizierten Teile gemäß einer vorbestimmten Entnahmekomplikationsklassifikation und zum Zuordnen mindestens einer Komplikationsklasse zu jedem identifizierten Teil;
- ein Entnahmemodul zum Steuern der Entnahmeeinrichtung für das Entnehmen von geschnittenen Teilen, die frei von einer Entnahmekomplikation sind, und klassifizierten Teilen; und
- ein Behandlungsmodul zum Steuern eines Behandelns der klassifizierten Teile mit mindestens einer Entnahmekomplikation gemäß mindestens einem, der jeweiligen Komplikationsklasse zugeordneten Behandlungsschritt.

Die Vorrichtung kann eine Einrichtung zum Bereitstellen eines Schneidwerkzeugs, z.B. eine Laserquelle zum Erzeugen eines Laserstrahls, beinhalten. Das Identifizierungsmodul kann zum Identifizieren von geschnittenen Teilen, die frei von einer Entnahmekomplikation sind, anhand der Sensordaten ausgebildet sein. Des Weiteren kann das Klassifizierungsmodul zum Klassifizieren der identifizierten Teile, die frei von einer Entnahmekomplikation sind, gemäß der vorbestimmten Entnahmekomplikationsklassifikation ausgebildet sein. Das Entnahmemodul kann zum Steuern der Entnahmeeinrichtung für das Entnehmen der klassifizierten Teile, die frei von einer Entnahmekomplikation sind, ausgebildet sein.

Die Entnahmekomplikationsklassifikation kann mindestens eine der folgenden Komplikationsklassen umfassen, ausgewählt aus:
- Teil, das unvollständig geschnitten ist;
- Teil, das an der Werkstückunterlage haftet;
- Teil, das in einem vom Schneidplan abweichenden Neigungswinkel angeordnet ist;
- Teil, das in einer vom Schneidplan abweichenden Position auf einem Entnahme-Kollisionskurs zum Werkstückrest angeordnet ist;
- Teil, das in einer vom Schneidplan abweichenden Position außer Reichweite oder in Reichweite der Entnahmeeinrichtung angeordnet ist;
- Teil, das in einem für die Entnahmeeinrichtung vorgesehenen Kontaktbereich des Teils mit Werkstückabfall und/oder einer Verunreinigung versehen ist; und
- Teil, das frei von einer Entnahmekomplikation ist.

Die Vorrichtung zum Schneiden von Teilen gemäß einem Schneidplan aus einem Werkstück und zum Entnehmen der geschnittenen Teile aus einem Werkstückrest des Werkstücks kann eine Informationsausgabeeinheit und/oder eine Reinigungseinrichtung aufweisen.

Der mindestens eine Behandlungsschritt kann ausgewählt sein aus
- erneutes Schneiden eines klassifizierten Teils, das unvollständig geschnitten ist;
- Unterlassen der Entnahme eines klassifizierten Teils, das unvollständig geschnitten ist und/oder an der Werkstückunterlage haftet, Ausgeben einer Entnahmekomplikationsinformation an die Informationsausgabeeinheit und/oder Einplanen des Schneidens eines entsprechenden Teils;
- Entnehmen eines klassifizierten Teils, das in einem vom Schneidplan abweichenden Neigungswinkel angeordnet ist, mit der Entnahmeeinrichtung, wobei eine Greifeinheit, insbesondere ein Greifarm, der Entnahmeeinrichtung anhand der Sensordaten den Neigungswinkel kompensierend winkelig verstellt wird;
- Entnehmen eines klassifizierten Teils, das in einer von dem Schneidplan abweichenden Position auf einem Entnahme-Kollisionskurs zum Werkstückrest angeordnet ist, mit der Entnahmeeinrichtung, wobei die Entnahmeeinrichtung anhand der Sensordaten den Kollisionskurs vermeidend angesteuert wird;
- Unterlassen der Entnahme eines klassifizierten Teils, das in einer von dem Schneidplan abweichenden Position außer Reichweite oder in Reichweite der Entnahmeeinrichtung angeordnet ist, Ausgeben einer Entnahmekomplikationsinformation an die Informationsausgabeeinheit und/oder Einplanen des Schneidens eines entsprechenden Teils;
- Lokalisieren eines klassifizierten Teils, das in einer von dem Schneidplan abweichenden Position in Reichweite der Entnahmeeinrichtung angeordnet ist, und Entnehmen des klassifizierten Teils mit der Entnahmeeinrichtung;
- Lokalisieren eines Werkstückabfalls und/oder einer Verunreinigung, der/die in einem für die Entnahmeeinrichtung vorgesehenen Kontaktbereich eines klassifizierten Teils vorhanden ist, anhand der Sensordaten, Entfernen des Werkstückabfalls und/oder der Verunreinigung mit der Reinigungseinrichtung anhand der Sensordaten und Entnehmen des klassifizierten Teils mit der Entnahmeeinrichtung; und
- Lokalisieren eines Werkstückabfalls und/oder einer Verunreinigung, der/die in einem für die Entnahmeeinrichtung vorgesehenen Kontaktbereich eines klassifizierten Teils vorhanden ist, anhand der Sensordaten, Kontaktieren des klassifizierten Teils mit der Entnahmeeinrichtung außerhalb des Kontaktbereichs anhand der Sensordaten und Entnehmen des klassifizierten Teils mit der Entnahmeeinrichtung.

Die Vorrichtung zum Schneiden von Teilen gemäß einem Schneidplan aus einem Werkstück und zum Entnehmen der geschnittenen Teile aus einem Werkstückrest des Werkstücks kann zum Sortieren der Teile, insbesondere zum Sortieren der Teile nach Formgleichheit, ausgebildet sein. Beispielsweise kann die Vorrichtung als eine automatische Sortiervorrichtung ausgebildet sein. Die Steuereinrichtung und/oder die Entnahmeeinrichtung kann ausgebildet sein, bei dem Entnehmen der geschnittenen Teile, die frei von einer Entnahmekomplikation sind, und/oder dem Behandeln der klassifizierten Teile mit mindestens einer Entnahmekomplikation und/oder dem Entnehmen der klassifizierten Teile mit mindestens einer Entnahmekomplikation und/oder dem Entnehmen der klassifizierten Teile, die frei von einer Entnahmekomplikation sind, ein Sortieren der jeweiligen Teile zu veranlassen und/oder auszuführen, insbesondere ein Sortieren nach Formgleichheit.

Die Vorrichtung zum Schneiden von Teilen gemäß einem Schneidplan aus einem Werkstück und zum Entnehmen der geschnittenen Teile aus einem Werkstückrest des Werkstücks, insbesondere das Abgleichmodul, das Identifizierungsmodul, das Klassifizierungsmodul, das Entnahmemodul und/oder das Behandlungsmodul, kann derart ausgebildet sein, dass das Entnehmen der Teile, die frei von einer Entnahmekomplikation sind, und/oder das Behandeln der klassifizierten Teile und/oder das Entnehmen der klassifizierten Teile ein Sortieren der jeweiligen Teile, insbesondere ein Sortieren nach Formgleichheit, beinhaltet. Dabei kann die Vorrichtung und/oder mindestens eines seiner Module ausgebildet sein, mindestens einen Sortierparameter, der beispielsweise im Schneidplan enthalten ist und/oder in der Steuereinrichtung und/oder in einer Speichereinheit der Vorrichtung gespeichert ist, anzuwenden. Beispielsweise kann das Abgleichmodul ausgebildet sein, beim Abgleichen mindestens einen Sortierparameter, z.B. eine Formgleichheit mehrerer Teile, anzuwenden. Ferner kann das Identifizierungsmodul ausgebildet sein, beim Identifizieren mindestens einen Sortierparameter, z.B. eine Formgleichheit mehrerer Teile, anzuwenden. Ferner kann das Erfassen der Teile in dem Werkstückrest ein optisches Erfassen, insbesondere ein ein-, zwei- und/oder dreidimensionales Erfassen, beinhalten. Außerdem können die Sensordaten ein-, zwei- und/oder dreidimensionale Informationen und/oder Daten enthalten.

In der Vorrichtung zum Schneiden von Teilen gemäß einem Schneidplan aus einem Werkstück und zum Entnehmen der geschnittenen Teile aus einem Werkstückrest des Werkstücks kann die Sensoreinrichtung mindestens einen optischen Sensor aufweisen. Der optische Sensor kann ausgebildet sein, ein-, zwei-, und/oder drei-dimensionale Sensordaten bereitzustellen. Die Sensoreinrichtung kann stationär oder mobil, insbesondere an einem beweglichen Roboterarm angeordnet, sein. Die Sensoreinrichtung kann mindestens eine Kamera, die an mindestens zwei unterschiedlichen Aufnahmepositionen anordnenbar ist, oder mindestens zwei Kameras, die an unterschiedlichen Positionen angeordnet sind, aufweisen.

Die Steuereinrichtung kann ein Beurteilungsmodul aufweisen, das ausgebildet ist, Sensordaten zur Ermittlung von Graubereichen um Seiten des Teils zu analysieren, und/oder das ein neuronales Netzwerk zum Schätzen der Entnahmekomplikation, insbesondere anhand der Graubereiche, aufweist. Dabei kann es sich z.B. um Sensordaten mehrerer zweidimensional abbildender Kameras handeln, mit denen Bilder mit Graubereichen erzeugt werden. Das Beurteilungsmodul kann in dem Identifizierungsmodul enthalten sein. Das Schätzen der Entnahmekomplikation kann ein Zugreifen auf zumindest ein trainiertes neuronales Netzwerk mit mindestens einem der ermittelten Graubereiche beinhalten, um ein Ergebnis zur Schätzung der Entnahmekomplikation zu berechnen. Während des Trainings des neuronalen Netzwerks können automatisch diejenigen Merkmale der Sensordaten und der Graubereiche bestimmt werden, die für die Schätzung der Entnahmekomplikation und für die Berechnung des Ergebnisses zu berücksichtigen sind. Das neuronale Netzwerk kann ein rechnerimplementiertes und maschinelles neuronales Netzwerk, z.B. ein deep neural network (DNN) in Form eines convolutional neural network (CNN) sein. So kann unter Einsatz künstlicher Intelligenz und/oder mit maschinellem Lernen mindestens eine Entnahmekomplikation ermittelt werden. Auf diese Weise kann beispielsweise die Identifizierung von in einem vom Schneidplan abweichenden Neigungswinkel angeordneten geschnittenen Teilen erfolgen.

Die Sensoreinrichtung kann mindestens eine TOF-Kamera aufweisen, die ausgebildet ist, Tiefeninformationen über die Teile zu gewinnen. Die Sensoreinrichtung kann mindestens eine Lichtfeld-Kamera aufweisen, die ausgebildet ist, Tiefeninformationen über die Teile zu gewinnen. Die Sensoreinrichtung kann mindestens einen Musterprojektor aufweisen. Die Sensoreinrichtung kann mindestens ein Lidar-System aufweisen. Die Sensoreinrichtung kann ferner mindestens einen Ultraschall-Sensor aufweisen, der zum Erhalten von Sensordaten ausgebildet ist.

Die Steuereinrichtung kann eine Speichereinheit aufweisen, in der mindestens ein Element gespeichert ist ausgewählt aus dem Schneidplan, den Sensordaten, der Entnahmekomplikationsklassifikation, den Komplikationsklassen, dem mindestens einen Behandlungsschritt, mindestens ein Schneidparameter, mindestens ein Entnahmeparameter, mindestens eine Entnahmestrategie, mindestens ein Sortierparameter und mindestens eine Sortierstrategie. Das Behandlungsmodul und/oder das Sensormodul kann ausgebildet sein, Daten über die durchgeführten Behandlungsschritte zu erfassen und/oder bereitzustellen. Die Steuereinrichtung kann als Computer ausgebildet sein oder einen solchen beinhalten.

Die Steuereinrichtung kann mindestens ein Element aufweisen ausgewählt aus
- einem Regelungsmodul, das ausgebildet ist, zur Vermeidung von Entnahmekomplikationen unter Verwendung der Daten über die durchgeführten Behandlungsschritte mindestens ein Element ausgewählt aus dem Schneidparameter, insbesondere mindestens einen die Breite eines Schnittspalts anpassenden Schneidparameter, dem Entnahmeparameter, der Entnahmestrategie, dem Sortierparameter und der Sortierstrategie anzupassen; und
- einem Verschachtelungsmodul, das ausgebildet ist, den Schneidplan zu bestimmen und zur Vermeidung von Entnahmekomplikationen unter Verwendung der Daten über die durchgeführten Behandlungsschritte den Schneidplan anzupassen.

Das Regelungsmodul kann ferner zur Regelung des Schneidens der Teile, der Entnahme der Teile und/oder des Sortierens der Teile ausgebildet sein, insbesondere anhand der angepassten Parameter und/oder der angepassten Strategien.

Die Steuereinrichtung kann mindestens ein Element aufweisen, ausgewählt aus
- einem Überwachungsmodul zum Überwachen des Entnehmens der Teile mit der Sensoreinrichtung; und
- einem Überprüfungsmodul zum Überprüfen der Werkstückunterlage mit der Sensoreinrichtung während des Verfahrens und/oder in einem abschließenden Verfahrensschritt, und/oder zum Ausgeben einer Verschleißinformation im Falle eines Verschleißes der Werkstückunterlage an die Informationsausgabeeinheit und/oder an die Steuereinrichtung, wobei die Verschleißinformation insbesondere angibt, welche Elemente der Werkstückunterlage zu welchem Zeitpunkt ersetzt werden müssen; und/oder zum Einplanen einer Reinigung der Werkstückunterlage im Falle einer Kontamination derselben.

In Ausführungsformen und Abwandlungen davon kann die Entnahmeeinrichtung mindestens eine Greifeinheit, insbesondere mindestens einen magnetischen Greifarm, mindestens einen Sauggreifarm oder mindestens einen Klemmgreifarm, aufweisen. Der magnetische Greifarm kann für das Entnehmen von magnetischen Metallteilen eingesetzt werden. Die Greifeinheit der Entnahmeeinrichtung kann winkelig verstellbar sein. Das Entnahmemodul kann ausgebildet sein, die Greifeinheit der Entnahmeeinrichtung anhand der Sensordaten anzusteuern, einen vom Schneidplan abweichenden Neigungswinkel eines klassifizierten Teils kompensierend zu verstellen. Die Greifeinheit kann beispielsweise an einem Roboterarm eines Roboters angeordnet sein.

Die Ausführungsformen und Abwandlungen der Vorrichtung zum Schneiden von Teilen gemäß einem Schneidplan aus einem Werkstück und zum Entnehmen der geschnittenen Teile aus einem Werkstückrest des Werkstücks können in den Ausführungsformen und Abwandlungen des Verfahrens zum Schneiden von Teilen gemäß einem Schneidplan aus einem Werkstück und zum Entnehmen der geschnittenen Teile aus einem Werkstückrest des Werkstücks genutzt werden. Mit den vorstehenden Ausführungsformen der Vorrichtung zum Schneiden von Teilen gemäß einem Schneidplan aus einem Werkstück und zum Entnehmen der geschnittenen Teile aus einem Werkstückrest des Werkstücks können die gleichen Vorteile und Funktionen realisiert werden, wie mit den Ausführungsformen des Verfahrens zum Schneiden von Teilen gemäß einem Schneidplan aus einem Werkstück und zum Entnehmen der geschnittenen Teile aus einem Werkstückrest des Werkstücks, insbesondere mit gleichlautenden und/oder analogen Merkmalen.

Eine weitere Ausführungsform betrifft ein Computerprogrammprodukt, umfassend ein oder mehrere Programmmodule, die bewirken, dass die Vorrichtung nach einer der vorstehenden Ausführungsformen und Abwandlungen die Schritte des Verfahrens nach einer der vorstehenden Ausführungsformen und Abwandlungen ausführt, insbesondere wenn die Programmmodule in eine Speichereinheit der Vorrichtung geladen werden. Die Programmmodule können Module der Vorrichtung der vorstehenden Ausführungsformen und Abwandlungen, insbesondere das Sensormodul, das Abgleichmodul, das Identifizierungsmodul, das Klassifizierungsmodul, das Entnahmemodul, das Behandlungsmodul, das Beurteilungsmodul, das Regelungsmodul, das Überprüfungsmodul, und/oder das Überwachungsmodul, enthalten.

Weitere Merkmale und Zweckmäßigkeiten ergeben sich aus der folgenden Beschreibung von Ausführungsbeispielen, den Figuren und den Unteransprüchen. Die vorstehend genannten und die nachstehend erläuterten Merkmale können nicht nur in den angegebenen Kombinationen, sondern auch in anderen Kombinationen oder in Alleinstellung einsetzbar sein, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1a bis 1c: schematisch ein erstes Beispiel gemäß Ausführungsformen, wobei Fig. 1a ein Verfahren zum Schneiden und Entnehmen von Teilen gemäß dem ersten Beispiel, Fig. 1b eine Vorrichtung 100 des ersten Beispiels, Fig. 1c eine Steuereinrichtung 120 der Vorrichtung 100 darstellen;
- Fig. 2a und 2b: schematisch ein Beispiel einer Komplikationsklasse P1 in Draufsicht und in einer seitlichen Querschnittsansicht;
- Fig. 3: schematisch ein Beispiel einer Komplikationsklasse P2 des geschnittenen Teils 12 in einer seitlichen Querschnittsansicht;
- Fig. 4, 5a bis 5d: schematisch Beispiele einer Komplikationsklasse P3 in seitlichen Querschnittsansichten;
- Fig. 6a und 6b: schematisch ein Beispiel einer Komplikationsklasse P4 in Draufsicht und in seitlichen Querschnittsansichten;
- Fig. 7: schematisch ein Beispiel einer Komplikationsklasse P5 in einer seitlichen Querschnittsansicht;
- Fig. 8a bis 8c: schematisch Beispiele einer Komplikationsklasse P6 in seitlichen Querschnittsansichten und in Draufsichten;
- Fig. 9: schematisch ein Beispiel des Schritts SB des ersten Beispiels mit Identifizierungsmodul 123;
- Fig. 10 bis 12: schematisch Beispiele für eine Sensoreinrichtung 112 der Vorrichtung 100;
- Fig. 13: schematisch zusätzliche Schritte SFX mit X = 0 bis 7 des Verfahrens weiterer Beispiele;
- Fig. 14: schematisch die Steuereinrichtung 120 der weiteren Beispiele; und
- Fig. 15: schematisch ein Verfahren zum Schneiden und Entnehmen von Teilen gemäß einem zweiten Beispiel.

In Ausführungsformen und Beispielen wird ein geschnittenes Teil auch "Teil" genannt. Ferner bezeichnet der Begriff "Teile, die frei von einer Entnahmekomplikation sind", Teile, die keine Entnahmekomplikation besitzen und/oder gut sortierbar sind, und daher für eine Standard-Entnahmeprozedur, bei der keine Entnahmekomplikationen berücksichtigt werden, geeignet sind. Gleiches gilt für grammatikalische Abwandlungen der genannten Begriffe. Der Begriff "Graubereich" kann auch Helligkeit, Pixelwert, Farbintensität, Farbwert oder Grauwert genannt werden.

In Ausführungsformen und Beispielen können einer oder mehrere Schritte des Verfahrens als eine oder mehrere intelligente Prozeduren implementiert werden. Hierfür können intelligente Regeln eingesetzt werden. Die Vorrichtung von Ausführungsformen und Beispielen kann entsprechend ausgebildet sein. Dies kann z.B. im Rahmen einer intelligenten Fertigung (Smart Factory), insbesondere einer Produktionsumgebung, die sich zumindest teilweise selbst organisiert, erfolgen. Der Begriff "intelligent" kann in diesem Zusammenhang verstanden werden als autonome Anpassung der Produktion unter Einsatz künstlicher Intelligenz und Ansätzen des maschinellen Lernens.

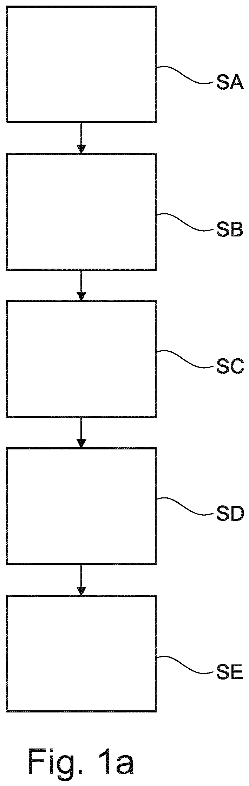

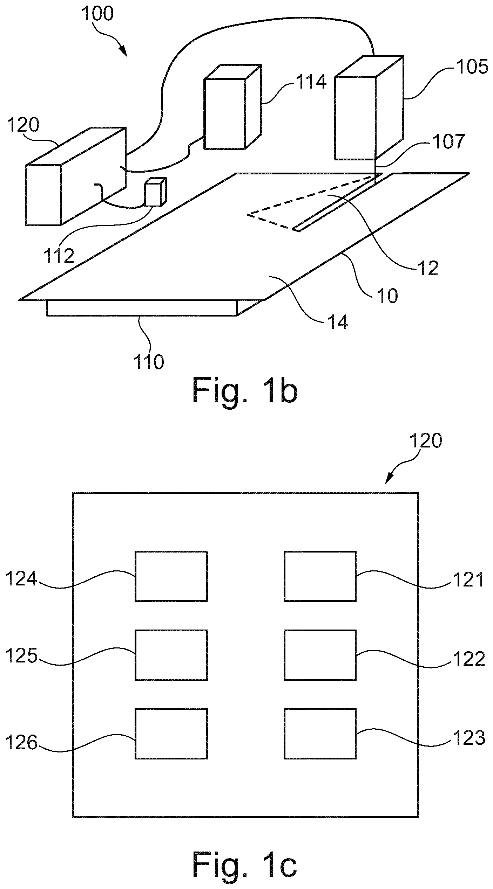

Fig. 1a bis 1c veranschaulichen schematisch ein erstes Beispiel gemäß Ausführungsformen. Das erste Beispiel betrifft eine Vorrichtung zum Schneiden und Entnehmen von Teilen, die in Fig. 1b als Laserschneidvorrichtung 100 schematisch dargestellt ist. Die Laserschneidvorrichtung 100 ist ausgebildet, Teile 12 gemäß einem Schneidplan aus einem Werkstück 10 zu schneiden, wobei ein Werkstückrest 14 zurückbleibt, und die geschnittenen Teile 12 aus dem Werkstückrest 14 zu entnehmen. Im vorliegenden Beispiel handelt es sich bei dem Werkstück 10 um ein Metallblech, beispielsweise aus Edelstrahl. Eines der zu erzeugenden Teile 12 ist in Fig. 1b auf einer Seite bereits geschnitten dargestellt, während die gestrichelten Linien die gemäß dem Schneidplan noch zu schneidenden Umrisse des Teils 12 darstellen. Die Laserschneidvorrichtung 100 besitzt eine Werkstückunterlage 110 für das Werkstück 10, eine Sensoreinrichtung 112 zum Erfassen der geschnittenen Teile 12 in dem Werkstückrest 14, eine Entnahmeeinrichtung 114 zum Entnehmen der geschnittenen Teile 12 aus dem Werkstückrest 14 und eine Steuereinrichtung 120. Im vorliegenden Beispiel ist die Werkstückunterlage 110 als ein Gitter mit einer Vielzahl von Auflageelementen für das Werkstück 10 ausgebildet.

Die Steuereinrichtung 120 weist, wie in Fig. 1c schematisch dargestellt ist, folgende Module auf:
- ein Sensormodul 121 zum Steuern der Sensoreinrichtung und zum Bereitstellen von Sensordaten über die erfassten geschnittenen Teile,
- ein Abgleichmodul 122 zum Abgleichen der Sensordaten mit dem Schneidplan;
- ein Identifizierungsmodul 123 zum Identifizieren von geschnittenen Teilen mit mindestens einer Entnahmekomplikation anhand der Sensordaten;
- ein Klassifizierungsmodul 124 zum Klassifizieren der identifizierten Teile gemäß einer vorbestimmten Entnahmekomplikationsklassifikation und zum Zuordnen mindestens einer Komplikationsklasse zu jedem identifizierten Teil;
- ein Entnahmemodul 125 zum Steuern der Entnahmeeinrichtung für das Entnehmen von geschnittenen Teilen, die frei von einer Entnahmekomplikation sind, und klassifizierten Teilen; und
- ein Behandlungsmodul 126 zum Steuern eines Behandelns der klassifizierten Teile mit mindestens einer Entnahmekomplikation gemäß mindestens einem, der jeweiligen Komplikationsklasse zugeordneten Behandlungsschritt.

Die Laserschneidvorrichtung 100 besitzt im vorliegenden Beispiel als eine Einrichtung zum Bereitstellen eines Schneidwerkzeugs einen Schneidkopf 105, der verbunden ist mit einer Laserquelle (nicht gezeigt) zum Erzeugen eines Laserstrahls 107 mit einer Leistung von 1 kW oder mehr und einer Wellenlänge im Bereich von 700 nm bis 2 µm. Mit dem Schneidkopf 105 kann der Laserstrahl 107 als ein Schneidwerkzeug auf das Werkstück 10 gerichtet werden. Der Schneidkopf 105 und somit der Laserstrahl 107 können in Schneidrichtung über das Werkstück 10 bewegt werden. Die Steuereinrichtung 120 ist mit dem Schneidkopf 105, der Sensoreinrichtung 112, und der Entnahmeeinrichtung 114 drahtgebunden datenleitend verbunden. Die Datenleitung kann auch via Lichtleiter oder drahtlos, z.B. per Funk erfolgen. Die Sensoreinrichtung 112 enthält vorliegend zwei stationäre Kameras, die an unterschiedlichen Positionen angeordnet sind und mit denen aus zwei unterschiedlichen seitlichen Beobachtungswinkeln jeweils zweidimensionale Sensordaten über die geschnittenen Teile 12 erhalten werden.

In einer Abwandlung des ersten Beispiels ist die Entnahmeeinrichtung 114 separiert von dem Schneidkopf 105 vorgesehen, z.B. getrennt durch eine Gehäusewand (nicht gezeigt). Die Sensoreinrichtung 112 ist an der Entnahmeeinrichtung 114 angeordnet. Die Werkstückunterlage 110 ist als Wechseltisch ausgebildet, mit dem die geschnittenen Teile 12 und der Werkstückrest 14 aus dem Bereich des Schneidkopfs 105, z.B. durch eine Öffnung der Gehäusewand, zur Entnahmeeinrichtung 114 transportiert werden. Dort findet die Entnahme der geschnittenen Teile 12 mit einem optionalen Sortieren derselben statt. Die Entnahmeeinrichtung 114 ist mit der Steuereinrichtung 120 der Laserschneidvorrichtung 100 datenleitend verbunden und wird mit dieser gesteuert. Die Entnahmeeinrichtung 114 kann eine eigene Steuereinheit (nicht gezeigt) besitzen, die Teil der Steuereinrichtung 120 ist und/oder mit dieser datenleitend verbunden ist,

In einer weiteren Abwandlung des ersten Beispiels ist in der Steuereinrichtung 120 und/oder in der Steuereinheit der Entnahmeeinrichtung 114 ein Kalibrationsmodul (nicht gezeigt) enthalten. Bei der Kalibration werden Sensordaten, z.B. Bilder, von Punkten an mindestens vier bekannten Positionen in einem Koordinatensystem der Laserschneidvorrichtung 100 oder der Entnahmeeinrichtung 114 erfasst und verarbeitet. Dies fördert die Erfassung der geschnittenen Teile 12 und anderer Objekte und die Behandlung und Entnahme der Teile 12.

Fig. 1a zeigt schematisch das Verfahren zum Schneiden und Entnehmen von Teilen des ersten Beispiels. Mit der Laserschneidvorrichtung 100 werden die Teile 12 gemäß dem Schneidplan entlang einer vorbestimmten Schneidkontur geschnitten. In einem Schritt SA des Verfahrens erfasst die Sensoreinrichtung 112 die geschnittenen Teile 12 in dem Werkstückrest 14, Sensordaten über die erfassten geschnittenen Teile 12 werden bereitgestellt und die Sensordaten werden mit dem Schneidplan abgeglichen. Die geschnittene Teile 12, die mindestens eine Entnahmekomplikation besitzen, werden in einem Schritt SB anhand der Sensordaten identifiziert. Die identifizierten Teile 12 werden in einem Schritt SC gemäß einer vorbestimmten Entnahmekomplikationsklassifikation klassifiziert. Dabei wird jedem identifizierten Teil 12 mindestens eine Komplikationsklasse zugeordnet. In einem Schritt SD werden geschnittene Teile, die frei von einer Entnahmekomplikation sind, mit der Entnahmeeinrichtung 114 entnommen. In einem Schritt SE werden die klassifizierten Teile mit mindestens einer Entnahmekomplikation gemäß mindestens einem, der jeweiligen Komplikationsklasse zugeordneten Behandlungsschritt behandelt. Hierfür können intelligente Regeln eingesetzt werden.

Die in Fig. 1a dargestellten Schritte SD und SE werden gemäß der zeitlichen Reihenfolge der Erzeugung der Teile, die frei von einer Entnahmekomplikation sind, und der Teile mit mindestens einer Entnahmekomplikation ausgeführt. Bei gleichzeitigem Vorliegen von Teilen 12, die frei von einer Entnahmekomplikation sind, und von Teilen 12 mit mindestens einer Entnahmekomplikation können die Schritte SD und SE zumindest teilweise gleichzeitig ausgeführt werden.

In einer Abwandlung des ersten Beispiels werden im Schritt SB auch die geschnittenen Teile 12, die frei von einer Entnahmekomplikation sind, anhand der Sensordaten identifiziert. Das Identifizierungsmodul 123 ist daher zum Identifizieren von geschnittenen Teilen, die frei von einer Entnahmekomplikation sind, anhand der Sensordaten ausgebildet. Im Schritt SC des Klassifizierens werden auch die identifizierten Teile 12, die frei von einer Entnahmekomplikation sind, gemäß der vorbestimmten Entnahmekomplikationsklassifikation klassifiziert und werden jeweils einer Komplikationsklasse P0 "Teil, das frei von einer Entnahmekomplikation ist" zugeordnet. Hierfür ist das Klassifizierungsmodul 124 zum Klassifizieren der identifizierten Teile 12, die frei von einer Entnahmekomplikation sind, gemäß der vorbestimmten Entnahmekomplikationsklassifikation ausgebildet. Die klassifizierten Teile, die frei von einer Entnahmekomplikation sind, werden im Schritt SD entnommen. Zu diesem Zweck ist das Entnahmemodul 125 zum Steuern der Entnahmeeinrichtung 114 für das Entnehmen der klassifizierten Teile 12, die frei von einer Entnahmekomplikation sind, ausgebildet. In einer weiteren Abwandlung des ersten Beispiels können der Komplikationsklasse P0 alle Teile 12, die keiner anderen Komplikationsklasse zugewiesen werden, zugeordnet werden.

Die Entnahmekomplikationsklassifikation beinhaltet im ersten Beispiel mindestens eine Komplikationsklasse P0 bis P6 und ist in der Steuereinrichtung 120 und/oder im Klassifizierungsmodul 124 gespeichert, z.B. in einer Speichereinheit (nicht gezeigt) derselben. Einer oder mehreren Komplikationsklassen können intelligente Regeln zugeordnet sein.

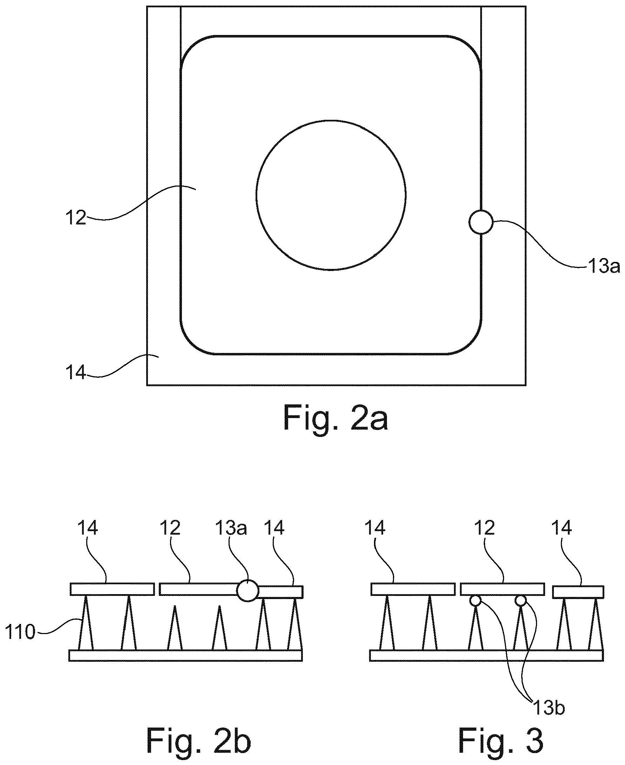

Fig. 2a zeigt als ein Beispiel für eine Komplikationsklasse P1 schematisch ein geschnittenes Teil 12 mit Werkstückrest 14 in Draufsicht. Fig. 2b stellt das geschnittene Teil 12 und den Werkstückrest 14 auf den Auflageelementen der Werkstückunterlage 110 aufliegend schematisch in einer seitlichen Querschnittsansicht dar. Zwischen Werkstück 12 und Werkstückrest 14 ist nach dem Schneiden eine Verbindungsstelle 13a vorhanden, die mit der Sensoreinrichtung 112 im Schritt SA erfasst wird. Im Schritt SB des Verfahrens wird deshalb das Teil 12 anhand der Sensordaten der Sensoreinrichtung 112 als mit einer Entnahmekomplikation behaftet identifiziert. Im Schritt SC wird für das Teil 12 eine Komplikationsklasse P1 der Entnahmekomplikationsklassifikation "Teil, das unvollständig geschnitten ist" ermittelt. Das klassifizierte, unvollständig geschnittene Teil 12 wird mit einem seiner Komplikationsklasse zugeordneten Behandlungsschritt SE behandelt. In einem Behandlungsschritt wird das unvollständig geschnittene Teil an der Verbindungsstelle 13a erneut geschnitten, worauf das Teil 12 entnommen wird. In einem alternativen Behandlungsschritt unterbleibt die Entnahme des klassifizierten Teils 12, das unvollständig geschnitten ist, eine Entnahmekomplikationsinformation wird ausgegeben, beispielsweise in Form eines akustischen Signals, und ein Schneiden eines Teils, dass dem unvollständig geschnittenen Teil 12 entspricht, wird für den weiteren Verlauf des Verfahrens eingeplant. Das unvollständig geschnittene Teil 12 verbleibt in diesem Fall am Werkstückrest 14 und wird mit diesem entsorgt.

Fig. 3 veranschaulicht ein Beispiel einer Komplikationsklasse P2 des geschnittenen Teils 12 schematisch in einer seitlichen Querschnittsansicht. Bei dieser Entnahmekomplikation haftet das Teil 12 an der Werkstückunterlage 110, aufgrund von beim Laserschneiden unerwünscht entstandenen Schweissverbindungen 13b, und kann deshalb nicht mit der Entnahmeeinrichtung 114 entnommen werden. Auch in diesem Fall unterbleibt in dem Behandlungsschritt SE die Entnahme des klassifizierten Teils 12, eine Entnahmekomplikationsinformation wird ausgegeben, beispielsweise in Form eines akustischen Signals, und ein Schneiden eines Teils, dass dem an der Werkstückunterlage haftenden Teil 12 entspricht, wird für den weiteren Verlauf des Verfahrens eingeplant. Zusätzlich kann eine Reinigung der Werkstückunterlage 110 eingeplant werden, um das anhaftende Teil 12 zu entfernen, oder die Werkstückunterlage wird ausgetauscht.

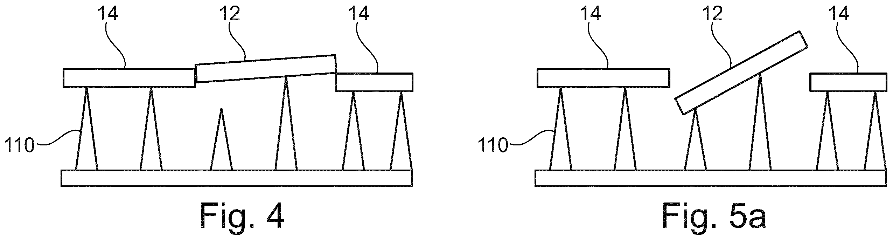

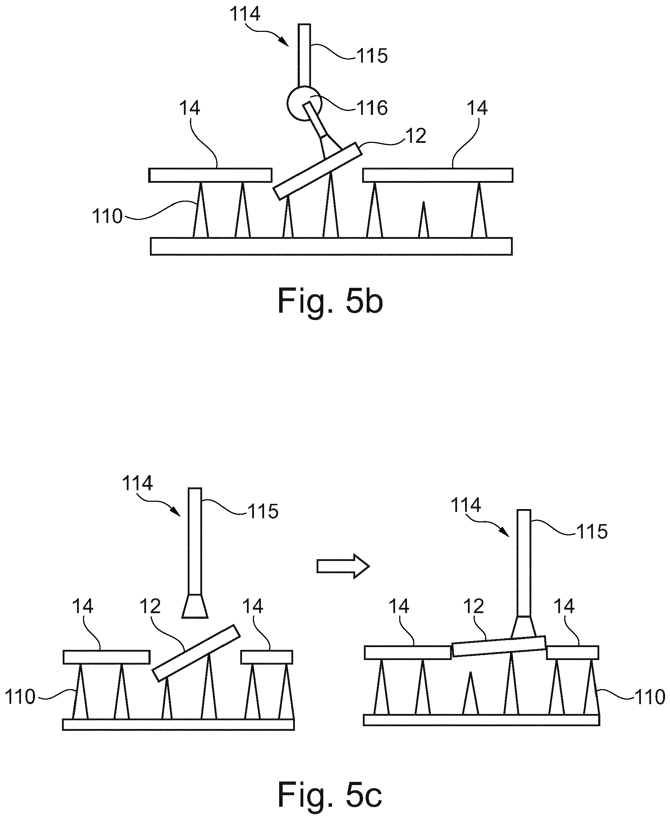

Fig. 4, 5a und 5b veranschaulichen Beispiele einer Komplikationsklasse P3 "Teil, das in einem vom Schneidplan abweichenden Neigungswinkel angeordnet ist", schematisch in seitlichen Querschnittsansichten. Bei der in Fig. 4 dargestellten Entnahmekomplikation ist das Teil 12 abweichend vom Schneidplan in einem kleinen Winkel gegenüber der Werkstückunterlage 110 geneigt. Bei der Entnahmekomplikation des in Fig. 5a gezeigten Teils 12 nimmt dieses einen stark vom Schneidplan abweichenden Neigungswinkel ein. Die Entnahmeeinrichtung 114 besitzt eine Greifeinheit mit einem Greifarm 115 in Form eines Sauggreifarms, der ein Gelenk 116 hat und an diesem winkelig verstellbar ist. Alternativ kann der Greifarm 115 als ein magnetischer Greifarm mit Gelenk 116 ausgebildet sein, wenn das Teil 12 ein Metall mit magnetischen Eigenschaften enthält. Der Greifarm 115 kann zusätzlich um seine Längsachse rotierbar sein. Im Schritt SE des Verfahrens wird für den Greifarm 115, nachdem der kleine Neigungswinkel des Teils 12 wie in Fig. 4 ermittelt wurde, eine optimale Kontaktposition zum Ergreifen des geneigten Teils 12 ermittelt und das Teil 12 wird ohne ein Verstellen des Gelenks 116 entnommen. Falls ein in Fig. 5a dargestellter, stark von Schneidplan abweichender Neigungswinkel des Teils 12 mit der Sensoreinrichtung 112 detektiert wurde, wird im Schritt SE anhand der Sensordaten der Greifarm 115 am Gelenk 116 den Neigungswinkel kompensierend winkelig verstellt, um das geneigt angeordnete Teil 12 auf der Werkstückunterlage 110 zu ergreifen und zu entfernen, wie für die in Fig. 5a gezeigte Entnahmekomplikation in Fig. 5b dargestellt ist.

In einer Abwandlung der Beispiele für die Komplikationsklasse P3 besitzt die Entnahmeeinrichtung 114 einen Greifarm 115, der kein Gelenk besitzt, wie in Fig. 5c veranschaulicht ist. Nachdem der Neigungswinkel des Teils 12 mit der Sensoreinrichtung 112 detektiert wurde, wird im Schritt SE des Verfahrens anhand der Sensordaten eine Berechnung durchgeführt, wie der Neigungswinkel des Teils 12 durch eine intelligente Prozedur mit dem Greifarm verstellt werden kann, indem der Greifarm an eine für das Verstellen geeignete Stelle des Teils 12 angenähert wird und dort andockt. Bei der Ermittlung der geeigneten Stelle kann der Schwerpunkt des Teils 12 berücksichtigt werden, der aus dem Schneidplan bekannt ist oder durch das Sensormodul 121, das Abgleichmodul 122 und/oder durch das Identifizierungsmodul 123 ermittelt wird. Dann wird das Teil 12 entnommen.

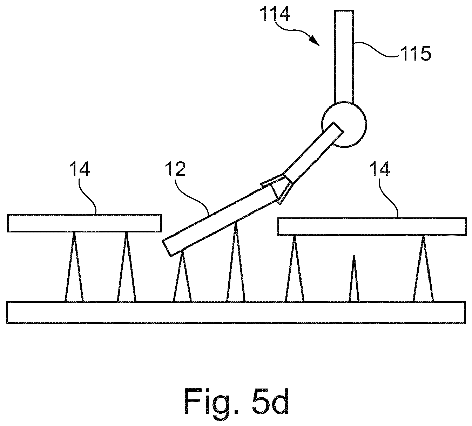

Eine weitere Abwandlung der Beispiele mit der Komplikationsklasse P3 betrifft eine Entnahmeeinrichtung 114 mit einem Greifarm 115 in Form eines Klemmgreifarms, der ein Gelenk 116 besitzt und an diesem winkelig verstellbar ist, wie in Fig. 5d dargestellt. Der Klemmgreifarm 115 wird im Schritt SE des Verfahrens ungefähr dem Neigungswinkel des Teils 12 entsprechend winkelig verstellt und ergreift das geneigte Teil 12 an einer seitlichen Schnittfläche, worauf das Teil 12 entnommen wird.

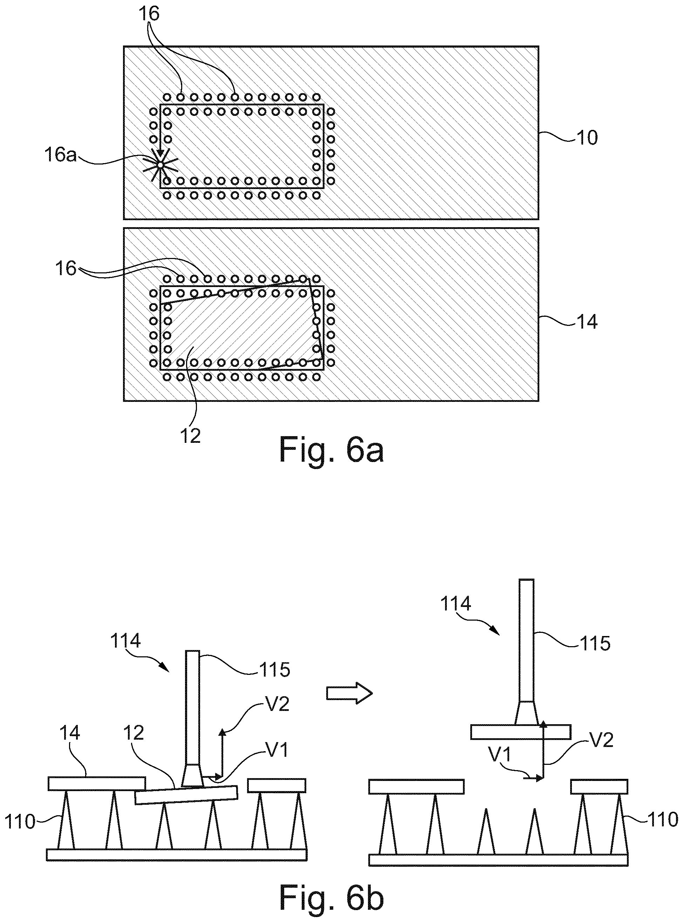

Fig. 6a und 6b veranschaulichen ein Beispiel einer Komplikationsklasse P4 "Teil, das in einer vom Schneidplan abweichenden Position auf einem Entnahme-Kollisionskurs zu Werkstückrest 14 angeordnet ist". Beispielsweise kann das Teil 12 mit dem Greifarm 115 gegriffen werden, kann aber nicht entnommen werden, da es verkeilt ist, aus der dem Schneidplan entsprechenden Position gefallen ist und/oder andere Teile 12 oder den Werkstückrest 14 verschoben hat oder durch solche verschoben wurde.

Fig. 6a zeigt in der oberen Darstellung das Werkstück 10 vor dem Scheiden schematisch in Draufsicht, mit eingezeichnetem, gemäß dem Schneidplan zu schneidenden Teil 12. Das Teil 12 wird im Gegenuhrzeigersinn mittels Laserstrahl 16a geschnitten. Entlang der Schneidkontur werden innerhalb und ausserhalb die Graubereiche entlang vorbestimmter Punkte 16 überwacht. Schließlich wird das Teil 12 durch den Laserstrahl 16a von dem Werkstückrest 14 gelöst, bewegt sich jedoch unerwünscht nach dem Lösen mit einer seiner seitlichen Schnittflächen unter den Werkstückrest 14. Nach dem Schneiden befindet sich das geschnittene Teil 12 also in einer vom Schneidplan abweichenden Position, wie in der unteren Darstellung der Fig. 6a schematisch in Draufsicht veranschaulicht ist. Das heißt, im vorliegenden Beispiel kann das geschnittene Teil 12 aus dem Werkstückrest 14 mit einer Standard-Entnahmeprozedur nicht entnommen werden, weil es mit dem Werkstückrest kollidieren würde, und besitzt daher eine Entnahmekomplikation der Komplikationsklasse P4. Wie in Fig. 6b schematisch in einer seitlichen Querschnittsansicht veranschaulicht, ist der Greifarm 115 im vorliegenden Beispiel der Entnahmeeinrichtung 114 nicht mit einem Gelenk ausgestattet. Im Schritt SE des Verfahrens werden, nachdem die unerwünschte Position des Teils 12 im Schritt SA mit der Sensoreinrichtung 112 detektiert wurde und das Teil 12 in den Schritten SB und SC identifiziert und klassifizierte wurde, anhand der Sensordaten Bewegungsvektoren für den Greifarm 115 berechnet. Ein seitlicher Bewegungsvektor V1 wird berechnet, mit dem der Greifarm 115 nach dem Ergreifen des Teils 12 dieses von seiner Position unterhalb des Werkstückrests 14 aus dem Kollisionskurs in eine dem Schneidplan ungefähr entsprechende Position bewegen kann. Ferner wird ein vertikaler Bewegungsvektor V2 berechnet, mit der das Teil 12 aus der dem Schneidplan ungefähr entsprechenden Position bewegt und von dem Werkstückrest 14 entfernt werden kann. Im Schritt SE des Verfahrens wird der Greifarm 115 entsprechend den Bewegungsvektoren V1 und V2 angesteuert und bewegt. Dabei kann zusätzlich die Bewegung des Greifarms mit der Sensoreinrichtung 112 beobachtet und, falls nötig, durch Berechnungen nachkorrigiert werden. So wird das Teil 12 der Komplikationsklasse P4 mit einer intelligenten Prozedur entnommen, wobei eine Kollision mit dem Werkstückrest 14 vermieden wird. Falls mit der Sensoreinrichtung 112 beobachtet wird, dass das Teil 12 trotz intelligenter Prozedur nicht ohne Verschieben des gesamten Werkstückrests 14 und noch nicht entnommener und optional sortierter Teile 12 entnommen werden kann, wird das Entnehmen abgebrochen. In einer Abwandlung dieses Beispiels kann auch ein Greifarm 115 mit Gelenk eingesetzt werden.

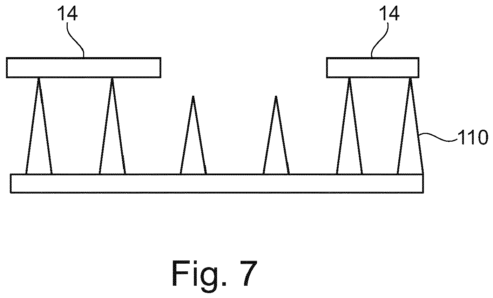

Fig. 7 zeigt ein Beispiel einer Komplikationsklasse P5 "Teil, das in einer vom Schneidplan abweichenden Position außer Reichweite oder in Reichweite der Entnahmeeinrichtung angeordnet ist". Im vorliegenden Beispiel hat sich das geschnittene Teil 12 nach dem vollständigen Schneiden aus der dem Schneidplan entsprechenden Position bewegt, z.B. weil es sich aufgrund von Erschütterungen der Werkstückunterlage 110 oder aufgrund des Gasdrucks eines beim Laserschneiden eingesetzten Schneidgases verschoben hat. Das geschnittene Teil 12 ist daher an der vom Schneidplan vorgesehenen Position oder an einer anderen Position in Reichweite der Entnahmeeinrichtung 114 nicht vorhanden, was anhand der Sensordaten festgestellt wird. Daher wird in einem Behandlungsschritt des Schritts SE die Entnahme des klassifizierten Teils 12, das in einer von dem Schneidplan abweichenden Position außer Reichweite der Entnahmeeinrichtung 114 angeordnet ist, unterlassen und eine Entnahmekomplikationsinformation ausgegeben. Optional wird ein Schneiden eines dem fehlenden Teil 12 entsprechenden Teils für den weiteren Verlauf des Verfahrens eingeplant. In einem alternativen Behandlungsschritt wird, wenn das klassifizierte Teil 12 auf einer vom Schneidplan abweichenden Position in Reichweite (nicht gezeigt) der Entnahmeeinrichtung 114 angeordnet ist, das Teil 12 anhand der Sensordaten lokalisiert. Falls keine zusätzliche Entnahmekomplikation vorliegt, wird der Greifarm 115 der Entnahmevorrichtung an die lokalisierte Position des Teils 12 bewegt und das Teil 12 entnommen.

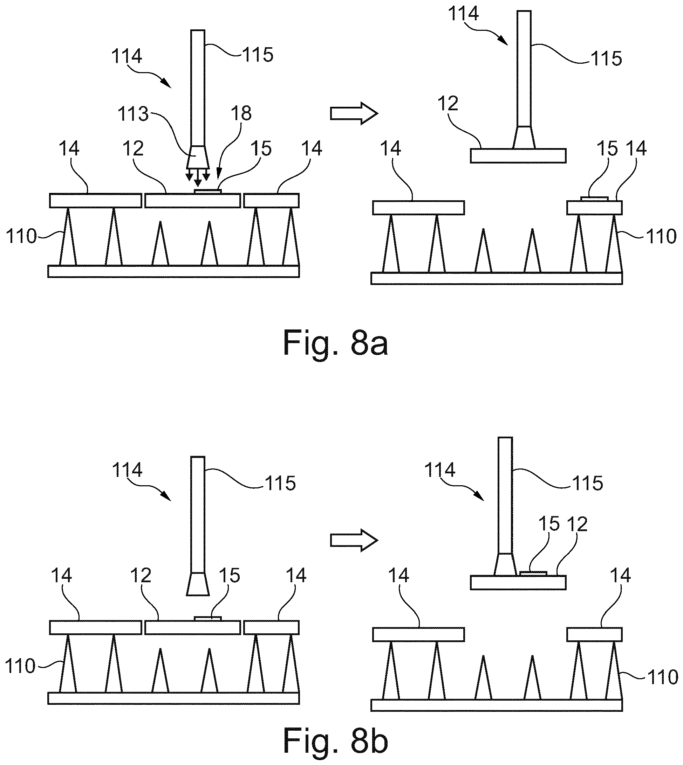

Fig. 8a bis 8c stellen beispielhalft eine Komplikationsklasse P6 "Teil, das in einem für die Entnahmeeinrichtung vorgesehenen Kontaktbereich des Teils mit Werkstückabfall und/oder einer Verunreinigung versehen ist", dar. Nach dem Schneiden befindet sich auf dem geschnittenen Teil 12 eine Verunreinigung 15, z.B. ein Werkstückabfall. Wie in der linken Darstellung der Fig. 8a veranschaulicht ist, handelt es sich um eine Entnahmekomplikation, falls die Verunreinigung 15 in einem für die Entnahmeeinrichtung 114 vorgesehenen Kontaktbereich 18 des Teils 12 vorhanden ist. Im Schritt SA des Verfahrens erfasst die Sensoreinrichtung 112 in dem Werkstückrest 14 die geschnittenen Teile einschließlich dem Teil 12 mit der Verunreinigung 15, entsprechende Sensordaten werden bereitgestellt und die Sensordaten werden mit dem Schneidplan abgeglichen. Das geschnittene Teil 12 mit der Verunreinigung 15 wird im Schritt SB anhand der Sensordaten identifiziert. Dem identifizierten Teil 12 wird im Schritt SC die Komplikationsklasse P6 zugeordnet. Im Schritt SD werden geschnittene Teile, die frei von einer Entnahmekomplikation sind, mit der Entnahmeeinrichtung 114 entnommen. Im Schritt SE wird das klassifizierte Teil 12 mit der Verunreinigung 15 gemäß mindestens einem, der Komplikationsklasse P6 zugeordneten Behandlungsschritt behandelt.

In einem in Fig. 8a veranschaulichten beispielhaften Behandlungsschritt wird die Verunreinigung 15 anhand der Sensordaten lokalisiert. Falls die Verunreinigung 15 in einem für die Entnahmeeinrichtung 114 vorgesehenen Kontaktbereich 18 des Teils 12 vorhanden ist, wird die Verunreinigung 15 mit einer Reinigungseinrichtung 113 anhand der Sensordaten entfernt. Im vorliegenden Beispiel ist die Reinigungseinrichtung 113 als Druckluftreiniger ausgebildet, der in den Greifarm 115 der Entnahmeeinrichtung 114 integriert ist. Die Verunreinigung 15 wird mit der Reinigungseinrichtung 113 entfernt, indem sie mit dem Druckluftreiniger beispielsweise auf den Werkstückrest 14 verschoben wird, wie schematisch in Fig. 8a dargestellt ist. Das gereinigte Teil 12 wird mit dem Greifarm 115 im vorgesehenen Kontaktbereich 18 kontaktiert und entnommen. So wird das Teil 12 der Komplikationsklasse P6 mit einer intelligenten Prozedur entnommen. Alternativ kann die Reinigungseinrichtung 113 als Unterdruckreiniger ausgebildet sein, mit dem die Verunreinigung 15 entfernt wird.

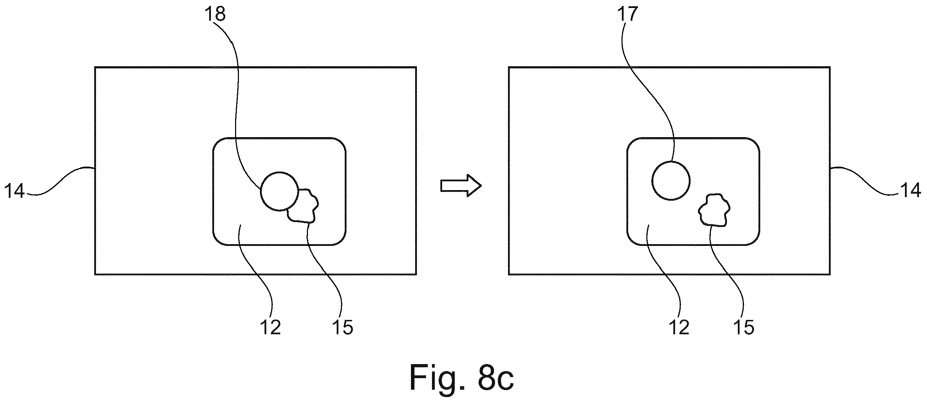

Ein alternativer Behandlungsschritt ist in Fig. 8b in seitlicher Querschnittsansicht und in Fig. 8c in Draufsicht von oben veranschaulicht. Dieser Behandlungsschritt beinhaltet das Lokalisieren der Verunreinigung 15 anhand der Sensordaten. Falls die Verunreinigung 15 in einem für die Entnahmeeinrichtung 114 vorgesehenen Kontaktbereich 18 des Teils 12 vorhanden ist, erfolgen die Schritte Kontaktieren des klassifizierten Teils 12 mit dem Greifarm 115 der Entnahmeeinrichtung 114 an einer Kontaktposition 17 außerhalb des vorgesehenen Kontaktbereichs 18 anhand der Sensordaten und Entnehmen des Teils 12 mit der Entnahmeeinrichtung, wobei die Verunreinigung auf dem Teil 12 verbleibt. Dabei wird als die Kontaktposition 17 eine Verunreinigungs-freie Kontaktposition außerhalb des vorgesehenen Kontaktbereichs 18 anhand der Sensordaten gewählt. Optional werden für das Auffinden der Kontaktposition 17 außerhalb des vorgesehenen Kontaktbereichs 18 Informationen über die Form und/oder das Material des Teils 12 berücksichtigt, z.B. das Gewicht und/oder den Schwerpunkt des Teils 12.

Alternativ wird im Falle eines verunreinigten Teils 12 in dem Behandlungsschritt des Schritts SE anhand der im Schritt SA erhaltenen Sensordaten entschieden, ob eine oder mehrere, z.B. eine Kombination und/oder eine Wiederholung, der vorstehend beschriebenen Prozeduren zum Entnehmen des Teils 12 mit der Komplikationsklasse P6 eingesetzt wird. Ein Behandlungsschritt für die Komplikationsklasse P6 beinhaltet z.B. eine Behandlung des Teils 12 mit der Reinigungseinrichtung 113, wie in Fig. 8a gezeigt, und eine Kontrolle des Reinigungserfolgs mit der Sensoreinrichtung 112. Falls anhand der Sensordaten festgestellt wird, dass die Verunreinigung 15 weiterhin auf dem Teil 12 vorhanden ist, wird das Teil 12 wie in Fig. 8b und 8c dargestellt, mit dem Greifarm 115 der Entnahmeeinrichtung 114 an der Kontaktposition 17 außerhalb des vorgesehenen Kontaktbereichs 18 kontaktiert und entnommen oder der Reinigungsschritt wird wiederholt.

In anderen Beispielen besitzt das geschnittene Teil 12 zwei oder mehr Entnahmekomplikationen und dem identifizierten Teil 12 werden im Schritt SC zwei oder mehr Komplikationsklassen zugeordnet. In derartigen Fällen wird im Behandlungsschritt des Schritts SE anhand der Sensordaten entschieden, ob und/oder in welcher Reihenfolge die den jeweiligen Komplikationsklassen zugeordneten Behandlungsschritte durchgeführt werden. Hat ein geschnittenes Teil 12 eine Verunreinigung, (Komplikationsklasse P6) und ist unter den Werkstückrest 14 gerutscht (Komplikationsklasse P4), so wird zuerst ein Behandlungsschritt für die Komplikationsklasse P6 durchgeführt und danach ein Behandlungsschritt für die Komplikationsklasse P4. Alternativ können die Behandlungsschritte für die Komplikationsklassen P4 und P6 kombiniert werden, z.B. Greifen des Teils 12 ausserhalb der Kontaktposition und Berechnen der Vektoren V1 und V2.

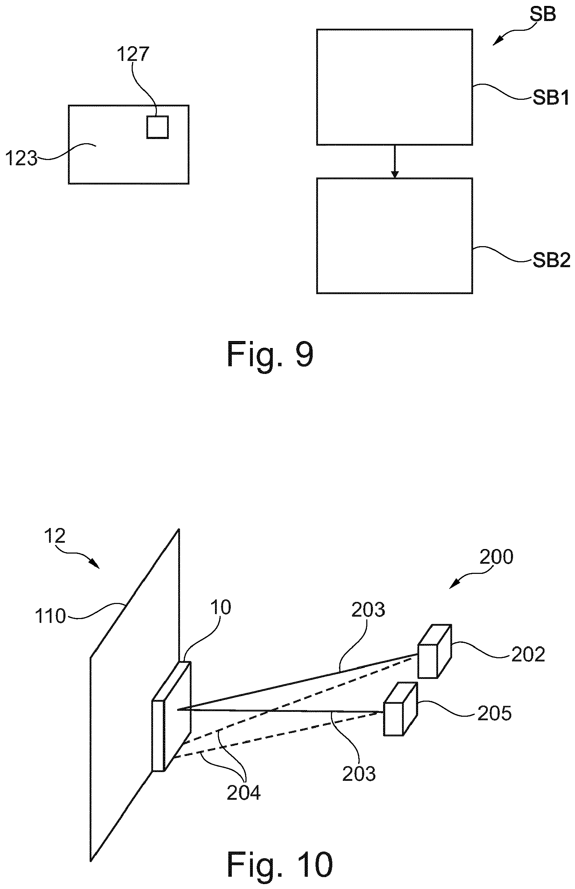

In einem weiteren Beispiel des Verfahrens beinhaltet der Schritt SB, wie in Fig. 9 veranschaulicht, eine Analyse der Sensordaten und eine Schätzung der Entnahmekomplikation. Die Sensordaten werden in einem Schritt SB1 zur Ermittlung von Graubereichen um Seiten des Teils analysiert und in einem Schritt SB2 wird mit einem neuronalen Netzwerk die Entnahmekomplikation anhand der Graubereiche geschätzt. Die Steuereinrichtung 120 weist in dem Identifizierungsmodul 123 zu diesem Zweck ein Beurteilungsmodul 127 auf, das ausgebildet ist, Sensordaten zur Ermittlung von Graubereichen um Seiten des Teils zu analysieren. Das Beurteilungsmodul 127 beinhaltet ein neuronales Netzwerk zum Schätzen der Entnahmekomplikation anhand der Graubereiche. Die geschätzte Entnahmekomplikation und die daraus resultierende Komplikationsklasse bildet die Basis für die weiteren Schritte des Verfahrens. Bei dem neuronalen Netzwerk handelt es sich im vorliegenden Beispiel um ein deep neural network (DNN) in Form eines convolutional neural networks (CNN).

Im vorstehend beschriebenen ersten Beispiel enthält die Sensoreinrichtung 112 zwei zweidimensional abbildende Kameras, die an unterschiedlichen Positionen angeordnet sind, als einen optischen Sensor, mit dem aus zwei unterschiedlichen seitlichen Beobachtungswinkeln Sensordaten über die geschnittenen Teile 12 erhalten werden. Alternativ weist die Sensoreinrichtung 112 mindestens eine Kamera auf, die an mindestens zwei unterschiedlichen Aufnahmepositionen anordnenbar ist. Die Sensoreinrichtung 112 ist in weiteren Beispielen an einem beweglichen Roboterarm der Laserschneidvorrichtung 100 angeordnet und daher mobil. In einem anderen Beispiel wird das Werkstück 10 mit Lichtquellen aus vier Richtungen beleuchtet. Anhand der Sensordaten werden in durch den optischen Sensor erhaltenen Bildern die Schatten analysiert. Da ein erfasstes Teil 12, das über anderen erfassten Teilen 12 oder dem Werkstückrest 14 angeordnet ist, keinen Schatten produziert, kann eine Tiefeninformation erhalten werden.

Fig. 10 bis 12 veranschaulichen Beispiele für die Sensoreinrichtung 112, mit denen Tiefeninformationen über die geschnittenen Teile 12 gewonnen werden und diese dreidimensional erfasst werden. Es können auch Tiefeninformationen über die Werkstückunterlage 110, über den Werkstückrest 14 und über das Werkstück 10 erhalten werden.

Fig. 10 stellt eine TOF-Kamera 200 (TOF: Time of Flight) dar, die in einem Beispiel der Sensoreinrichtung 112 als Sensor genutzt wird. Um Entfernungen zu berechnen, wertet die TOF-Kamera die Phasenverschiebung zwischen einem Referenzsignal (gesendetes Signal) und einem von dem zu erfassenden geschnittenen Teil 12 reflektierten, empfangenen Signal aus. Die Phasenverschiebung der beiden Signale ist proportional zum Abstand zum erfassten Bildpunkt. Die TOF-Kamera besitzt einen Emitter 202, der homogene Lichtkegel 203, 204 mit modulierter Intensität emittiert. Entfernt vom Emitter 202 ist in der TOF-Kamera ein Detektor 205 für die reflektierten homogenen Lichtkegel 203, 204 vorgesehen. Die homogenen Lichtkegel 203, 204 werden auf das zu schneidende Werkstück 10 gerichtet, von dort reflektiert und mit dem Detektor 205 erfasst. Dabei misst der Detektor 205 für jeden erfassten Bildpunkt des Werkstücks 10 die Zeit, die das Licht bis zum ausgeleuchteten Bereich des Werkstücks 10 und wieder zurück benötigt. Die benötigte Zeit ist direkt proportional zur Distanz zum betreffenden Bildpunkt. So werden die Tiefeninformationen über die Teile 12 gewonnen.

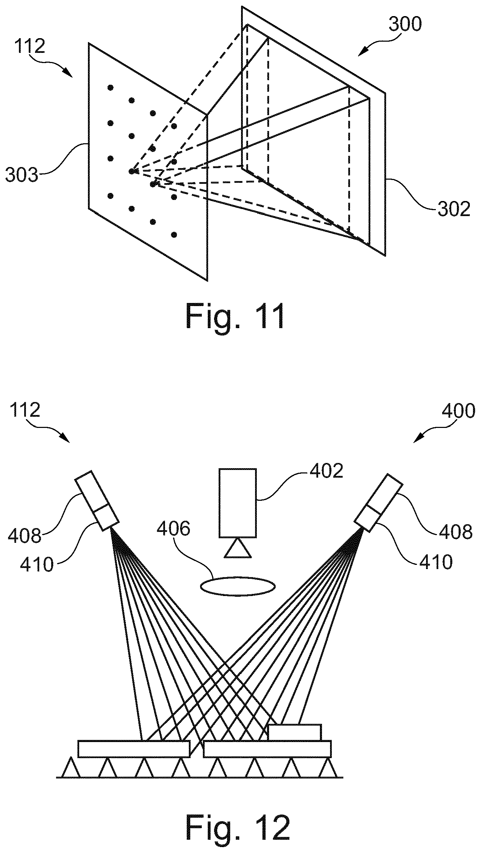

In einem weiteren, in Fig. 11 veranschaulichten Beispiel weist die Sensoreinrichtung 112 eine Lichtfeld-Kamera 300 auf. Jeder Bildpunkt wird mit der Lichtfeld-Kamera 300 aus mehreren Blickwinkeln erfasst, z.B. durch ein Gitter 303 (Array) aus Mikrolinsen 304 vor einem flächigen Sensor 302. Durch das Linsengitter 303 wird jeder Bildpunkt nochmals gebrochen und zu einem Kegel erweitert, der auf die Fläche des Sensors 302 trifft. Dies verrät, aus welcher Richtung der Lichtstrahl des betreffenden Bildpunkts kommt und Tiefeninformationen über die Teile 12 werden erhalten.

Fig. 12 zeigt als ein anderes Beispiel einen Musterprojektor 400, der in der Sensoreinrichtung 112 enthalten ist. Der Musterprojektor 400 hat eine Kamera 402, der ein Filter 406 vorgeschaltet ist. Ferner sind zwei Lichtquellen 408, beispielsweise Laserquellen, vorgesehen, denen jeweils eine Optik 410 zur Erzeugung eines Musters der jeweiligen Lichtstrahlen vorgeschaltet ist. Die Lichtquellen 408 sind derart angeordnet, dass die Muster aus zwei unterschiedlichen Winkeln auf das Werkstück 10 in einer vorbestimmten Musterkombination auftreffen. Die Musterkombination wird mit der Kamera 402 erfasst. Aus Veränderungen der vorbestimmten Musterkombination wird die Tiefeninformation über die geschnittenen Teile 12 gewonnen. Die Tiefeninformation, d.h. eine dreidimensionale Information, wird dabei durch Triangulation erzeugt. Die Kamera 402 detektiert z. B. wie in Fig. 12 dargestellt von oben, während die Lichtquellen 408 seitlich angebracht sind. Die Sensoreinrichtung 112 kann alternativ mindestens ein Lidar(Light Detection and Ranging)-System 500 mit einem Lidar-Sensor aufweisen. Das Lidar-System wertet wie die TOF-Kamera die Laufzeitinformation von Licht aus, das vom Werkstück 10 reflektiert wird. Durch mindestens einen sich bewegenden Detektor, z.B. eine Kamera, der Sensoreinrichtung 112 oder durch eine Mehrzahl von Detektoren der Sensoreinrichtung 112 kann ein Höhenprofil des Werkstücks 10 entlang einer Gerade oder gar einer Fläche erstellt werden. Die Sensoreinrichtung 112 kann auch mindestens einen Ultraschall-Sensor 600 aufweisen, mit dem Sensordaten erhalten werden. Der Ultraschall-Sensor 600 erstellt ein dreidimensionales Modell des erfassten Bereichs des Werkstücks 10 mittels einer Ultraschallquelle, einem Mikrophon-Array und einer Auswerteeinheit.

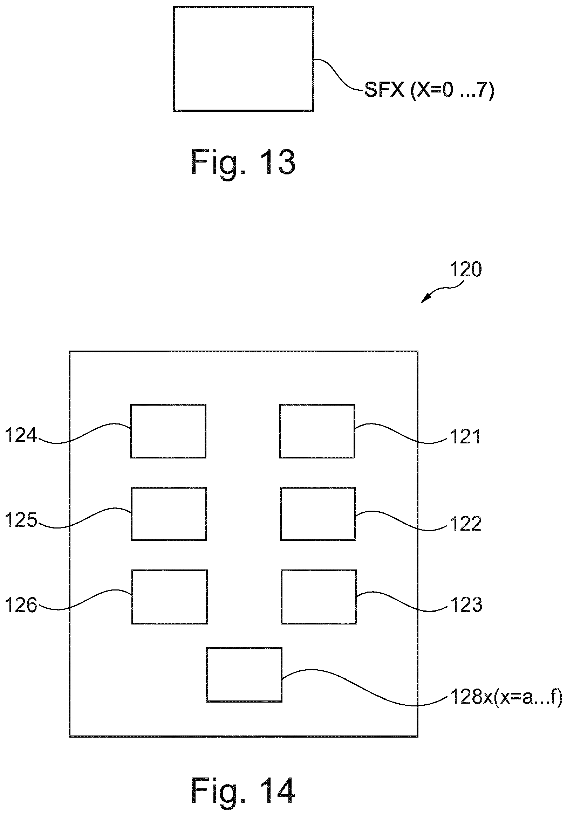

In weiteren Beispielen ist die Laserschneidvorrichtung 100 ausgebildet, zusätzliche Schritte im Verfahren zum Schneiden und Entnehmen bereitzustellen und auszuführen, wie in Fig. 13 und 14 veranschaulicht ist. Fig. 13 stellt die zusätzlichen Schritte SFX mit X = 0 bis 7 des Verfahrens dar, wobei, falls im Verfahren implementiert, mindestens einer der Schritte SF0 bis SF7 im Verfahren enthalten ist. Fig. 14 zeigt die Steuereinrichtung 120, die zusätzliche Module 128x mit x = a bis e zur Bereitstellung der zusätzlichen Schritte aufweist, wobei, falls in der Steuereinrichtung 120 implementiert, mindestens eines der Module 128a bis 128e in der Steuereinrichtung 120 enthalten ist. Ferner kann die Steuereinrichtung 120 eine Informationsausgabeeinheit 128f beinhalten und/oder damit verbunden sein.

In einem Beispiel ist die Laserschneidvorrichtung 100 derart ausgebildet, dass das Entnehmen der Teile 12, die frei von einer Entnahmekomplikation sind, und/oder das Behandeln der klassifizierten Teile 12 und/oder das Entnehmen der klassifizierten Teile 12 ein Sortieren der jeweiligen Teile nach Formgleichheit gemäß einem Schritt SF0 beinhaltet. Beispielsweise sind die Steuereinrichtung 120 und die Entnahmeeinrichtung 114 ausgebildet, beim Entnehmen jedes Teils 12 mindestens einen Sortierparameter für Formgleichheit, der im Schneidplan enthalten ist, anzuwenden und die Teile 12 nach Formgleichheit zu sortieren. Zum Beispiel weist die Steuereinrichtung 120 ein Sortiermodul 128a auf.

In einem Beispiel ist das Behandlungsmodul 126 ausgebildet, Daten über die durchgeführten Behandlungsschritte zu erfassen. Im Verfahren dieses Beispiels erfolgt dies in dem in Fig. 13 gezeigten Schritt SF1. Diese Daten können anderen Modulen der Steuereinrichtung 120 bereitgestellt werden.

Ferner weist die Steuereinrichtung 120 in einem weiteren Beispiel ein Regelungsmodul 128b auf. Mit dem Regelungsmodul 128b werden zur Vermeidung von Entnahmekomplikationen unter Verwendung der Daten über die durchgeführten Behandlungsschritte mindestens ein Element ausgewählt aus einem Schneidparameter, insbesondere mindestens einen die Breite eines Schnittspalts anpassenden Schneidparameter, einem Entnahmeparameter, einer Entnahmestrategie, dem Sortierparameter und einer Sortierstrategie angepasst. Im Verfahren erfolgt dies in dem Schritt SF2. Im Verfahren dieses Beispiels werden die angepassten Parameter und/oder die angepassten Strategien in einem Schritt zur Regelung des Schneidens der Teile, der Entnahme der Teile und/oder des Sortierens der Teile eingesetzt.

Gemäß anderer Beispiele ist in der Steuereinrichtung 120 ein Verschachtelungsmodul 128c vorgesehen, das ausgebildet ist, den Schneidplan zu bestimmen und zur Vermeidung von Entnahmekomplikationen unter Verwendung der Daten über die durchgeführten Behandlungsschritte den Schneidplan anzupassen. Im Verfahren dieser Beispiele erfolgt Letzteres in dem Schritt SF3. Auf diese Weise werden anhand der Daten über die durchgeführten Behandlungsschritte das Verfahren und die Qualität der erzeugten Teile 12 optimiert.

Die Steuereinrichtung 120 enthält in einem weiteren Beispiel ein Überwachungsmodul 128d zum Überwachen des Entnehmens und/oder des Sortierens der Teile 12 mit der Sensoreinrichtung 112. Im Verfahren dieses Beispiels erfolgt das Überwachen in dem Schritt SF4.

In einem anderen Beispiel enthält die Steuereinrichtung 120 ein Überprüfungsmodul 128e zum Überprüfen der Werkstückunterlage 110 mit der Sensoreinrichtung 112 während des Verfahrens und/oder in einem abschließenden Verfahrensschritt, und/oder zum Ausgeben einer Verschleißinformation im Falle eines Verschleißes der Werkstückunterlage an eine Informationsausgabeeinheit 128f der Steuereinrichtung 120. Im Verfahren erfolgt das Überprüfen in dem Schritt SF5. Dabei gibt die Verschleißinformation an, welche Elemente der Werkstückunterlage zu welchem Zeitpunkt ersetzt werden müssen. Das Ausgeben einer Verschleißinformation erfolgt im dem Schritt SF6 des Verfahrens. Ferner wird im Falle einer Kontamination der Werkstückunterlage eine Reinigung derselben veranlasst. Im Verfahren erfolgt Letzteres in dem Schritt SF7.

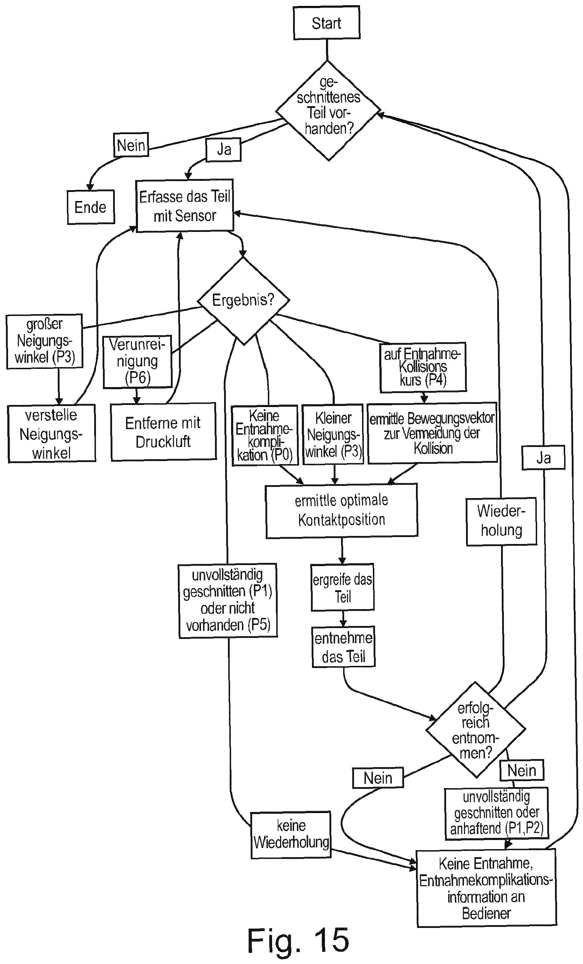

Fig. 15 stellt ein zweites Beispiel des Verfahrens dar. Das Verfahren wird gestartet und es wird ermittelt, ob ein geschnittenes Teil 12 vorhanden ist, beispielsweise mit der Sensoreinrichtung 112. Wenn kein geschnittenes Teil 12 vorhanden ist, wird das Verfahren beendet. Wenn ein geschnittenes Teil 12 vorhanden ist, wird das Teil mit der Sensoreinrichtung 112 erfasst. Es wird ermittelt, ob ein Ergebnis der Erfassung vorliegt. Wenn als Ergebnis ein großer Neigungswinkel des Teils gemäß der Komplikationsklasse P3 festgestellt wird, gibt die Steuereinrichtung 120 den Befehl an den Greifarm 115 der Entnahmeeinrichtung 114 aus, den Neigungswinkel zu verstellen. Wenn eine Verunreinigung 15 auf dem vorgesehenen Kontaktbereich 18 des Teil 12 gemäß der Komplikationsklasse P6 festgestellt wird, folgt der Befehl an die Reinigungseinrichtung 113, die Verunreinigung mit Druckluft zu entfernen. Wenn keine Entnahmekomplikation gemäß der Komplikationsklasse P0 vorliegt, oder wenn festgestellt wird, dass das Teil 12 einen kleinen Neigungswinkel gemäß der Komplikationsklasse P3 einnimmt, erfolgt der Befehl an das Behandlungsmodul 126, die optimale Kontaktposition für die Entnahmeeinrichtung 114 zu bestimmen. Wenn als Ergebnis festgestellt wird, dass das Teil 12 auf einem Entnahme-Kollisionskurs zum Werkstückrest 14 gemäß der Komplikationsklasse P4 angeordnet ist, ergeht der Befehl an das Behandlungsmodul 126, mindesten einen Bewegungsvektor V1, V2 für die Entnahmeeinrichtung 114 zur Vermeidung der Kollision zu bestimmen. Danach erfolgt der Befehl an das Behandlungsmodul 126, die optimale Kontaktposition für die Entnahmeeinrichtung 114 zu ermitteln. Nachdem in den Fällen der Komplikationsklassen P0, P3 oder P4 der Befehl an das Behandlungsmodul 126 erging, die optimale Kontaktposition zu bestimmen, wird der Befehl an die Entnahmeeinrichtung 114 ausgegeben, das Teil 12 zu ergreifen und danach das Teil 12 zu entnehmen. Dann wird ermittelt, ob das Teil 12 erfolgreich entnommen wurde. Falls das Teil 12 erfolgreich entnommen wurde, wird ermittelt, ob ein weiteres geschnittenes Teil 12 vorhanden ist und das Verfahren fortgesetzt wird. Falls das Teil 12 nicht erfolgreich entnommen wurde, wird eine Entnahmekomplikationsinformation ausgegeben, ein Entnehmen des Teils 12 unterbleibt und es wird ermittelt, ob ein weiteres geschnittenes Teil 12 vorhanden ist und das Verfahren fortgesetzt wird. Falls das Teil 12 nicht erfolgreich entnommen wurde und daraufhin eine der Entnahmekomplikationen der Komplikationsklassen P1 und P2 festgestellt wird, nämlich dass das Teil 12 unvollständig geschnitten ist und an dem Werkstückrest 14 haftet oder dass das Teil an der Werkstückunterlage 110 haftet, wird eine Entnahmekomplikationsinformation ausgegeben, ein Entnehmen des Teils 12 unterbleibt und es wird ermittelt, ob ein weiteres geschnittenes Teil 12 vorhanden ist und das Verfahren fortgesetzt wird. Falls das Teil 12 nicht erfolgreich entnommen wurde, wird alternativ eine Wiederholung des Entnehmens unter erneutem Erfassen des Teils 12 mit der Sensoreinrichtung 112 veranlasst. Wenn beim Erfassen des Teils 12 mit der Sensoreinrichtung 112 als Ergebnis festgestellt wird, dass das Teil 12 gemäß der Komplikationsklasse P1 unvollständig geschnitten ist oder gemäß der Komplikationsklasse P5 an der dem Schneidplan entsprechenden Position nicht vorhanden ist, wird keine Wiederholung des Entnehmens veranlasst, es wird eine Entnahmekomplikationsinformation ausgegeben, ein Entnehmen des Teils 12 unterbleibt und es wird ermittelt, ob ein weiteres geschnittenes Teil 12 vorhanden ist und das Verfahren fortgesetzt wird.

### Bezuaszeichenliste

- 10: Werkstück
- 12: Teil
- 13a: Verbindungsstelle
- 13b: Schweissverbindung
- 14: Werkstückrest
- 15: Verunreinigung
- 16: Punkt
- 16a: Laserstrahl
- 17: Kontaktposition
- 18: Kontaktbereich
- 100: Vorrichtung zum Schneiden von Teilen gemäß einem Schneidplan aus einem Werkstück und zum Entnehmen der geschnittenen Teile aus einem Werkstückrest des Werkstücks; Laserschneidvorrichtung
- 105: Schneidkopf
- 107: Laserstrahl, Schneidwerkzeug
- 110: Werkstückunterlage
- 112: Sensoreinrichtung
- 113: Reinigungseinrichtung
- 114: Entnahmeeinrichtung
- 115: Greifarm
- 116: Gelenk
- 120: Steuereinrichtung
- 121: Sensormodul
- 122: Abgleichmodul
- 123: Identifizierungsmodul
- 124: Klassifizierungsmodul
- 125: Entnahmemodul
- 126: Behandlungsmodul
- 127: Beurteilungsmodul
- 128a: Sortiermodul
- 128b: Regelungsmodul
- 128c: Verschachtelungsmodul
- 128d: Überwachungsmodul
- 128e: Überprüfungsmodul
- 128f: Informationsausgabeeinheit
- 200: TOF-Kamera
- 202: Emitter
- 203: Lichtkegel
- 204: Lichtkegel
- 205: Detektor
- 300: Lichtfeldkamera
- 302: Sensor
- 303: Linsengitter
- 400: Musterprojektor
- 402: Kamera
- 406: Filter
- 408: Lichtquelle
- 410: Optik
- P0: Komplikationsklasse
- P1: Komplikationsklasse
- P2: Komplikationsklasse
- P3: Komplikationsklasse
- P4: Komplikationsklasse
- P5: Komplikationsklasse
- P6: Komplikationsklasse
- SA: Schritt
- SB: Schritt
- SC: Schritt
- SD: Schritt
- SE: Schritt; Behandlungsschritt
- SF0: Schritt; Sortieren
- SF1: Schritt
- SF2: Schritt
- SF3: Schritt
- SF4: Schritt
- SF5: Schritt
- SF6: Schritt
- SF7: Schritt
- V1: Bewegungsvektor
- V2: Bewegungsvektor

## Patentansprüche

1. Verfahren zum Schneiden von Teilen gemäß einem Schneidplan aus einem Werkstück (10) und zum Entnehmen der geschnittenen Teile (12) aus einem Werkstückrest (14) des Werkstücks, beinhaltend die Schritte
- Erfassen der geschnittenen Teile (12) in dem Werkstückrest (14) mit einer Sensoreinrichtung (112), Bereitstellen von Sensordaten über die erfassten geschnittenen Teile (12) und Abgleichen der Sensordaten mit dem Schneidplan (SA);
- Identifizieren von geschnittenen Teilen (12) mit mindestens einer Entnahmekomplikation anhand der Sensordaten (SB);
- Klassifizieren der identifizierten Teile (12) gemäß einer vorbestimmten Entnahmekomplikationsklassifikation, wobei jedem identifizierten Teil mindestens eine Komplikationsklasse (P0; P1; P2; P3; P4; P5; P6) zugeordnet wird (SC);
- Entnehmen von geschnittenen Teilen (12), die frei von einer Entnahmekomplikation sind, mit einer Entnahmeeinrichtung (114) (SD); und
- Behandeln der klassifizierten Teile (12) mit mindestens einer Entnahmekomplikation gemäß mindestens einem, der jeweiligen Komplikationsklasse (P0; P1; P2; P3; P4; P5; P6) zugeordneten Behandlungsschritt (SE).

2. Verfahren nach Anspruch 1,
wobei der Schritt des Identifizierens (SB) ein Identifizieren der geschnittenen Teile (12), die frei von einer Entnahmekomplikation sind, anhand der Sensordaten beinhaltet; und/oder
wobei der Schritt des Klassifizierens (SC) ein Klassifizieren der identifizierten Teile (12), die frei von einer Entnahmekomplikation sind, gemäß der vorbestimmten Entnahmekomplikationsklassifikation beinhaltet; und/oder
wobei der Schritt des Entnehmens (SD) der geschnittenen Teile (12), die frei von einer Entnahmekomplikation sind, ein Entnehmen der klassifizierten Teile, die frei von einer Entnahmekomplikation sind, beinhaltet.

3. Verfahren nach einem der vorstehenden Ansprüche,
wobei die Entnahmekomplikationsklassifikation mindestens eine der folgenden Komplikationsklassen (P0; P1; P2; P3; P4; P5; P6) umfasst, ausgewählt aus:
- Teil (12), das unvollständig geschnitten ist (P1);
- Teil (12), das an einer Werkstückunterlage haftet (P2);
- Teil (12), das in einem vom Schneidplan abweichenden Neigungswinkel angeordnet ist (P3);
- Teil (12), das in einer vom Schneidplan abweichenden Position auf einem Entnahme-Kollisionskurs zum Werkstückrest angeordnet ist (P4);
- Teil (12), das in einer vom Schneidplan abweichenden Position außer Reichweite oder in Reichweite der Entnahmeeinrichtung (114) angeordnet ist (P5);
- Teil (12), das in einem für die Entnahmeeinrichtung (114) vorgesehenen Kontaktbereich (18) des Teils mit Werkstückabfall und/oder einer Verunreinigung versehen ist (P6); und
- Teil (12), das frei von einer Entnahmekomplikation ist (P0).

4. Verfahren nach einem der vorstehenden Ansprüche,
wobei der mindestens eine Behandlungsschritt (SE) ausgewählt ist aus
- erneutes Schneiden eines klassifizierten Teils (12), das unvollständig geschnitten ist;
- Unterlassen der Entnahme eines klassifizierten Teils (12), das unvollständig geschnitten ist und/oder an einer Werkstückunterlage (110) haftet, Ausgeben einer Entnahmekomplikationsinformation und/oder Einplanen des Schneidens eines entsprechenden Teils (12);
- Entnehmen eines klassifizierten Teils (12), das in einem vom Schneidplan abweichenden Neigungswinkel angeordnet ist, mit der Entnahmeeinrichtung (114), wobei eine Greifeinheit (115), insbesondere ein Greifarm, der Entnahmeeinrichtung anhand der Sensordaten den Neigungswinkel kompensierend winkelig verstellt wird;
- Entnehmen eines klassifizierten Teils (12), das in einer von dem Schneidplan abweichenden Position auf einem Entnahme-Kollisionskurs zum Werkstückrest angeordnet ist, mit der Entnahmeeinrichtung (114), wobei die Entnahmeeinrichtung anhand der Sensordaten den Kollisionskurs vermeidend angesteuert wird;
- Unterlassen der Entnahme eines klassifizierten Teils (12), das in einer von dem Schneidplan abweichenden Position außer Reichweite der Entnahmeeinrichtung (114) angeordnet ist, Ausgeben einer Entnahmekomplikationsinformation und/oder Einplanen des Schneidens eines entsprechenden Teils (12);
- Lokalisieren eines klassifizierten Teils (12), das in einer von dem Schneidplan abweichenden Position in Reichweite der Entnahmeeinrichtung (114) angeordnet ist, und Entnehmen des klassifizierten Teils (12) mit der Entnahmeeinrichtung;
- Lokalisieren eines Werkstückabfalls und/oder einer Verunreinigung (15), der/die in einem für die Entnahmeeinrichtung (114) vorgesehenen Kontaktbereich (18) eines klassifizierten Teils (12) vorhanden ist, anhand der Sensordaten, Entfernen des Werkstückabfalls und/oder der Verunreinigung (15) mit einer Reinigungseinrichtung (113) anhand der Sensordaten und Entnehmen des klassifizierten Teils (12) mit der Entnahmeeinrichtung (114); und
- Lokalisieren eines Werkstückabfalls und/oder einer Verunreinigung (15), der/die in einem für die Entnahmeeinrichtung (114) vorgesehenen Kontaktbereich (18) eines klassifizierten Teils (12) vorhanden ist, anhand der Sensordaten, Kontaktieren des klassifizierten Teils (12) mit der Entnahmeeinrichtung außerhalb des Kontaktbereichs anhand der Sensordaten und Entnehmen des klassifizierten Teils (12) mit der Entnahmeeinrichtung.

5. Verfahren nach einem der vorstehenden Ansprüche,
wobei das Entnehmen der geschnittenen Teile (12), die frei von einer Entnahmekomplikation sind, und/oder das Behandeln der klassifizierten Teile (12) mit mindestens einer Entnahmekomplikation, und/oder das Entnehmen der klassifizierten Teile (12) mit mindestens einer Entnahmekomplikation, und/oder das Entnehmen der klassifizierten Teile (12), die frei von einer Entnahmekomplikation sind, ein Sortieren (SF0) der jeweiligen Teile, insbesondere ein Sortieren nach Formgleichheit, beinhaltet; und/oder
wobei das Erfassen der Teile (12) in dem Werkstückrest (14) ein optisches Erfassen beinhaltet.

6. Verfahren nach einem der vorstehenden Ansprüche,
wobei die Sensoreinrichtung (112) mindestens einen optischen Sensor (200, 300; 400) aufweist; und/oder
wobei die Sensoreinrichtung (112) stationär oder mobil, insbesondere an einem beweglichen Roboterarm, angeordnet, ist; und/oder
wobei die Sensoreinrichtung (112) mindestens eine Kamera, die an mindestens zwei unterschiedlichen Aufnahmepositionen angeordnet wird, oder mindestens zwei Kameras, die an unterschiedlichen Positionen angeordnet sind, aufweist; und/oder wobei die Sensordaten zur Ermittlung von Graubereichen um Seiten des Teils (12) analysiert werden und/oder mit einem neuronalen Netzwerk die Entnahmekomplikation geschätzt wird; und/oder
wobei die Sensoreinrichtung (112) mindestens eine TOF-Kamera (200) aufweist, mit der Tiefeninformationen über die Teile gewonnen werden; und/oder
wobei die Sensoreinrichtung (112) mindestens eine Lichtfeld-Kamera (300) aufweist, mit der Tiefeninformationen über die Teile gewonnen werden; und/oder
wobei die Sensoreinrichtung (112) mindestens einen Musterprojektor (400) aufweist; und/oder
wobei die Sensoreinrichtung (112) mindestens ein Lidar-System aufweist; und/oder
wobei die Sensoreinrichtung (112) mindestens einen Ultraschall-Sensor aufweist, mit dem Sensordaten erhalten werden.

7. Verfahren nach einem der vorstehenden Ansprüche,
wobei Daten über die durchgeführten Behandlungsschritte (SE) erfasst werden (SF1); und/oder wobei zur Vermeidung von Entnahmekomplikationen unter Verwendung der Daten über die durchgeführten Behandlungsschritte (SE) mindestens ein Element ausgewählt aus mindestens einem Schneidparameter, insbesondere mindestens einen die Breite eines Schnittspalts anpassenden Schneidparameter, mindestens einem Entnahmeparameter, mindestens einer Entnahmestrategie, mindestens einem Sortierparameter und mindestens einer Sortierstrategie angepasst werden (SF2); und/oder
wobei zur Vermeidung von Entnahmekomplikationen unter Verwendung der Daten über die durchgeführten Behandlungsschritte (SE) der Schneidplan angepasst wird (SF3).

8. Verfahren nach einem der vorstehenden Ansprüche,
wobei mit der Sensoreinrichtung (112) das Entnehmen überwacht wird (SF4); und/oder
wobei während des Verfahrens und/oder in einem abschließenden Verfahrensschritt mit der Sensoreinrichtung (112) eine Werkstückunterlage (110) erfasst und/oder überprüft wird (SF5); und/oder
wobei im Falle eines Verschleißes der Werkstückunterlage (110) eine Verschleißinformation ausgegeben wird, wobei die Verschleißinformation insbesondere angibt, welche Elemente der Werkstückunterlage zu welchem Zeitpunkt ersetzt werden müssen (SF6); und/oder
wobei im Falle einer Kontamination der Werkstückunterlage (110) eine Reinigung derselben eingeplant wird (SF7).

9. Vorrichtung (100, 105) zum Schneiden von Teilen gemäß einem Schneidplan aus einem Werkstück (10) und zum Entnehmen der geschnittenen Teile (12) aus einem Werkstückrest (14) des Werkstücks, insbesondere mit einem Verfahren nach einem der vorstehenden Ansprüche;
beinhaltend
eine Werkstückunterlage (110), eine Sensoreinrichtung (112) zum Erfassen der geschnittenen Teile (12) in dem Werkstückrest, eine Entnahmeeinrichtung (114) zum Entnehmen der Teile (12) und eine Steuereinrichtung (120);
wobei die Steuereinrichtung (120) aufweist
- ein Sensormodul (121) zum Steuern der Sensoreinrichtung und zum Bereitstellen von Sensordaten über die erfassten geschnittenen Teile (12),
- ein Abgleichmodul (122) zum Abgleichen der Sensordaten mit dem Schneidplan;
- ein Identifizierungsmodul (123) zum Identifizieren von geschnittenen Teilen mit mindestens einer Entnahmekomplikation anhand der Sensordaten;
- ein Klassifizierungsmodul (124) zum Klassifizieren der identifizierten Teile (12) gemäß einer vorbestimmten Entnahmekomplikationsklassifikation und zum Zuordnen mindestens einer Komplikationsklasse (P0; P1; P2; P3; P4; P5; P6) zu jedem identifizierten Teil;
- ein Entnahmemodul (125) zum Steuern der Entnahmeeinrichtung (114) für das Entnehmen von geschnittenen Teilen (12), die frei von einer Entnahmekomplikation sind, und klassifizierten Teilen (12); und
- ein Behandlungsmodul (126) zum Steuern eines Behandelns der klassifizierten Teile (12) mit mindestens einer Entnahmekomplikation gemäß mindestens einem, der jeweiligen Komplikationsklasse zugeordneten Behandlungsschritt (SE).

10. Vorrichtung nach Anspruch 9,
wobei das Identifizierungsmodul (123) zum Identifizieren von geschnittenen Teilen (12), die frei von einer Entnahmekomplikation sind, anhand der Sensordaten ausgebildet ist; und/oder
wobei das Klassifizierungsmodul (124) zum Klassifizieren der identifizierten Teile (12), die frei von einer Entnahmekomplikation sind, gemäß der vorbestimmten Entnahmekomplikationsklassifikation ausgebildet ist; und/oder
wobei das Entnahmemodul (125) zum Steuern der Entnahmeeinrichtung (114) für das Entnehmen der klassifizierten Teile (12), die frei von einer Entnahmekomplikation sind, ausgebildet ist.

11. Vorrichtung nach Anspruch 9 oder 10,
wobei die Entnahmekomplikationsklassifikation mindestens eine der folgenden Komplikationsklassen (P0; P1; P2; P3; P4; P5; P6) umfasst, ausgewählt aus:
- Teil (12), das unvollständig geschnitten ist (P1);
- Teil (12), das an der Werkstückunterlage haftet (P2);
- Teil (12), das in einem vom Schneidplan abweichenden Neigungswinkel angeordnet ist (P3);
- Teil (12), das in einer vom Schneidplan abweichenden Position auf einem Entnahme-Kollisionskurs zum Werkstückrest angeordnet ist (P4);
- Teil (12), das in einer vom Schneidplan abweichenden Position außer Reichweite oder in Reichweite der Entnahmeeinrichtung (114) angeordnet ist (P5);
- Teil (12), das in einem für die Entnahmeeinrichtung (114) vorgesehenen Kontaktbereich des Teils (12) mit Werkstückabfall und/oder einer Verunreinigung versehen ist (P6); und
- Teil (12), das frei von einer Entnahmekomplikation ist (P0).

12. Vorrichtung nach einem der Ansprüche 9 bis 11,
wobei die Vorrichtung eine Informationsausgabeeinheit (128f) und/oder eine Reinigungseinrichtung (113) aufweist; und/oder
wobei der mindestens eine Behandlungsschritt (SE) ausgewählt ist aus
- erneutes Schneiden eines klassifizierten Teils (12), das unvollständig geschnitten ist;
- Unterlassen der Entnahme eines klassifizierten Teils (12), das unvollständig geschnitten ist und/oder an der Werkstückunterlage haftet, Ausgeben einer
Entnahmekomplikationsinformation an die Informationsausgabeeinheit (128f) und/oder
Einplanen des Schneidens eines entsprechenden Teils (12);
- Entnehmen eines klassifizierten Teils (12), das in einem vom Schneidplan abweichenden Neigungswinkel angeordnet ist, mit der Entnahmeeinrichtung (114), wobei eine Greifeinheit (115), insbesondere ein Greifarm, der Entnahmeeinrichtung (114) anhand der Sensordaten den Neigungswinkel kompensierend winkelig verstellt wird;
- Entnehmen eines klassifizierten Teils (12), das in einer von dem Schneidplan abweichenden Position auf einem Entnahme-Kollisionskurs zum Werkstückrest angeordnet ist, mit der Entnahmeeinrichtung (114), wobei die Entnahmeeinrichtung anhand der Sensordaten den Kollisionskurs vermeidend angesteuert wird;
- Unterlassen der Entnahme eines klassifizierten Teils (12), das in einer von dem Schneidplan abweichenden Position außer Reichweite der Entnahmeeinrichtung (114) angeordnet ist, Ausgeben einer Entnahmekomplikationsinformation an die Informationsausgabeeinheit (128f) und/oder Einplanen des Schneidens eines entsprechenden Teils (12);
- Lokalisieren eines klassifizierten Teils (12), das in einer von dem Schneidplan abweichenden Position in Reichweite der Entnahmeeinrichtung (114) angeordnet ist, und Entnehmen des klassifizierten Teils (12) mit der Entnahmeeinrichtung;
- Lokalisieren eines Werkstückabfalls und/oder einer Verunreinigung (15), der/die in einem für die Entnahmeeinrichtung (114) vorgesehenen Kontaktbereich (18) eines klassifizierten Teils (12) vorhanden ist, anhand der Sensordaten, Entfernen des Werkstückabfalls und/oder der Verunreinigung (15) mit der Reinigungseinrichtung anhand der Sensordaten und Entnehmen des klassifizierten Teils (12) mit der Entnahmeeinrichtung (114); und
- Lokalisieren eines Werkstückabfalls und/oder einer Verunreinigung (15), der/die in einem für die Entnahmeeinrichtung (114) vorgesehenen Kontaktbereich (18) eines klassifizierten Teils (12) vorhanden ist, anhand der Sensordaten, Kontaktieren des klassifizierten Teils (12) mit der Entnahmeeinrichtung außerhalb des Kontaktbereichs anhand der Sensordaten und Entnehmen des klassifizierten Teils (12) mit der Entnahmeeinrichtung.

13. Vorrichtung nach einem der Ansprüche 9 bis 12,
wobei die Vorrichtung zum Sortieren der Teile (12), insbesondere zum Sortieren der Teile nach Formgleichheit, ausgebildet ist; und/oder
wobei die Steuereinrichtung (120) und/oder die Entnahmeeinrichtung (114) ausgebildet sind, bei dem Entnehmen der geschnittenen Teile (12), die frei von einer Entnahmekomplikation sind, und/oder dem Behandeln der klassifizierten Teile (12) mit mindestens einer Entnahmekomplikation und/oder dem Entnehmen der klassifizierten Teile (12) mit mindestens einer Entnahmekomplikation und/oder dem Entnehmen der klassifizierten Teile (12), die frei von einer Entnahmekomplikation sind, ein Sortieren der jeweiligen Teile (12) zu veranlassen und/oder auszuführen, insbesondere ein Sortieren nach Formgleichheit.

14. Vorrichtung nach einem der Ansprüche 9 bis 13,
wobei die Sensoreinrichtung (112) mindestens einen optischen Sensor aufweist; und/oder
wobei die Sensoreinrichtung (112) stationär oder mobil, insbesondere an einem beweglichen Roboterarm angeordnet, ist; und/oder
wobei die Sensoreinrichtung (112) mindestens eine Kamera, die an mindestens zwei unterschiedlichen Aufnahmepositionen anordnenbar ist, oder mindestens zwei Kameras, die an unterschiedlichen Positionen angeordnet sind, aufweist; und/oder
wobei die Steuereinrichtung (120) ein Beurteilungsmodul (127) aufweist, das ausgebildet ist, Sensordaten zur Ermittlung von Graubereichen um Seiten des Teils (12) zu analysieren, und/oder das ein neuronales Netzwerk zum Schätzen der Entnahmekomplikation aufweist; und/oder
wobei die Sensoreinrichtung (112) mindestens eine TOF-Kamera (200) aufweist, die ausgebildet ist, Tiefeninformationen über die Teile (12) zu gewinnen; und/oder
wobei die Sensoreinrichtung (112) mindestens eine Lichtfeld-Kamera (300) aufweist, die ausgebildet ist, Tiefeninformationen über die Teile (12) zu gewinnen; und/oder
wobei die Sensoreinrichtung (112) mindestens einen Musterprojektor (400) aufweist; und/oder
wobei die Sensoreinrichtung (112) mindestens ein Lidar-System aufweist; und/oder
wobei die Sensoreinrichtung (112) mindestens einen Ultraschall-Sensor aufweist, der zum Erhalten von Sensordaten ausgebildet ist.

15. Vorrichtung nach einem der Ansprüche 9 bis 14,
wobei die Steuereinrichtung (120) eine Speichereinheit aufweist, in der mindestens ein Element gespeichert ist ausgewählt aus dem Schneidplan, den Sensordaten, der Entnahmekomplikationsklassifikation, den Komplikationsklassen, dem mindestens einen Behandlungsschritt, mindestens ein Schneidparameter, mindestens ein Entnahmeparameter, mindestens eine Entnahmestrategie, mindestens ein Sortierparameter und mindestens eine Sortierstrategie; und/oder
wobei das Behandlungsmodul (126) und/oder das Sensormodul (121) ausgebildet ist, Daten über die durchgeführten Behandlungsschritte (SE) zu erfassen.

16. Vorrichtung nach einem der Ansprüche 9 bis 15,
wobei die Steuereinrichtung (120) mindestens ein Element aufweist ausgewählt aus
- einem Regelungsmodul (128b), das ausgebildet ist, zur Vermeidung von Entnahmekomplikationen unter Verwendung der Daten über die durchgeführten Behandlungsschritte mindestens ein Element ausgewählt aus dem Schneidparameter, insbesondere mindestens einen die Breite eines Schnittspalts anpassenden Schneidparameter, dem Entnahmeparameter, der Entnahmestrategie, dem Sortierparameter und der Sortierstrategie anzupassen; und
- einem Verschachtelungsmodul (128c), das ausgebildet ist, den Schneidplan zu bestimmen und zur Vermeidung von Entnahmekomplikationen unter Verwendung der Daten über die durchgeführten Behandlungsschritte (SE) den Schneidplan anzupassen.

17. Vorrichtung nach einem der Ansprüche 9 bis 16,
wobei die Steuereinrichtung (120) mindestens ein Element aufweist, ausgewählt aus
- einem Überwachungsmodul (128d) zum Überwachen des Entnehmens der Teile (12) mit der Sensoreinrichtung (112); und
- einem Überprüfungsmodul (128e) zum Überprüfen der Werkstückunterlage mit der Sensoreinrichtung (112) während des Verfahrens und/oder in einem abschließenden Verfahrensschritt, und/oder zum Ausgeben einer Verschleißinformation im Falle eines Verschleißes der Werkstückunterlage (110) an die Informationsausgabeeinheit (128f) und/oder an die Steuereinrichtung (120), wobei die Verschleißinformation insbesondere angibt, welche Elemente der Werkstückunterlage (110) zu welchem Zeitpunkt ersetzt werden müssen; und/oder zum Einplanen einer Reinigung der Werkstückunterlage im Falle einer Kontamination derselben.

18. Vorrichtung nach einem der Ansprüche 9 bis 17,
wobei die Entnahmeeinrichtung (114) mindestens eine Greifeinheit (115), insbesondere mindestens einen magnetischen Greifarm, mindestens einen Sauggreifarm oder mindestens einen Klemmgreifarm, aufweist; und/oder
wobei die Greifeinheit (115) der Entnahmeeinrichtung winkelig verstellbar ist und das Entnahmemodul ausgebildet ist, die Greifeinheit der Entnahmeeinrichtung anhand der Sensordaten anzusteuern, einen vom Schneidplan abweichenden Neigungswinkel eines klassifizierten Teils (12) kompensierend zu verstellen.

19. Computerprogrammprodukt, umfassend ein oder mehrere Programmmodule, die bewirken, dass die Vorrichtung nach einem der Ansprüche 9 bis 18 die Schritte des Verfahrens nach einem der Ansprüche 1 bis 8 ausführt, insbesondere wenn die Programmmodule in eine Speichereinheit der Vorrichtung geladen werden.
